# EUROPÄISCHE PATENTSCHRIFT

(11) **EP 2 378 158 B1**
(45) Veröffentlichungstag und Bekanntmachung des Hinweises auf die Patenterteilung: **02.07.2014**
(21) Anmeldenummer: 11154548.9
(22) Anmeldetag: 15.02.2011
(51) Int. Cl.: F16G 3/00

(54) **Spannvorrichtung für Ketten**
Tension device for chains
Dispositif de serrage pour chaînes

(30) Priorität: 15.04.2010 DE 102010015266
(43) Veröffentlichungstag der Anmeldung: 19.10.2011
(60) Teilanmeldung: 13189564.1
(73) Patentinhaber: RUD Ketten Rieger & Dietz GmbH u. Co. KG, 73432 Aalen (DE)
(72) Erfinder: Smetz, Reinhard, 86720 Nördlingen-Kleinerdlingen (DE); Betzler, Michael, 73453 Abtsgmünd (DE)
(74) Vertreter: Grünecker, Kinkeldey, Stockmair & Schwanhäusser

(56) Entgegenhaltungen:
- EP-A1- 1 671 527
- EP-A2- 0 848 189
- EP-A2- 1 588 975
- DE-A1-102008 012 293
- US-A- 4 274 754
- US-A1- 2011 176 884

## Beschreibung

Die Erfindung betrifft eine Spannvorrichtung für Ketten mit einem Spindelkörper, der mit wenigstens einem Spindelgewinde versehen ist, mit wenigstens zwei Kupplungselementen, wobei wenigstens ein Kupplungselement ein mit dem Spindelgewinde verschraubtes Kupplungsgewinde aufweist, und mit einem Sicherungselement, das von einer Lösestellung, in der das Kupplungsgewinde gegenüber dem Spindelgewinde drehbar ist, in eine Sicherungsstellung, in der eine Drehung des Kupplungsgewindes gegenüber dem Spindelkörper formschlüssig blockiert ist, überführbar ausgestaltet ist.

Spannvorrichtungen der oben genannten Art sind aus dem Stand der Technik bekannt. Die EP 1460306 A1 zeigt beispielsweise eine Spannvorrichtung für Ketten, die einen bolzenförmigen, rotationssymmetrischen Spindelkörper aufweist, der an seinen sich gegenüberliegenden Enden mit Außengewinden versehen ist. Auf den Außengewinden des Spindelkörpers sind Kupplungselemente aufgeschraubt, die als Verkürzungsklaue oder Verkürzungshaken zur Verbindung mit einer Kette ausgestaltet sein können.

Um durch Verdrehen des Spindelkörpers den Abstand zwischen den Kupplungselementen zu vergrößern oder zu verkleinern, sind die Gewinde an den Enden des Spindelkörpers üblicherweise gegenläufig ausgestaltet. An dem Spindelkörper kann ein Hebel zum Aufbringen eines Momentes befestigt sein, um den Spindelkörper zu verdrehen und somit die Kupplungselemente an seinen Enden von dem Spindelkörper weg oder in Richtung des Spindelkörpers zu bewegen. Der Hebel kann beispielsweise in eine Durchgangsöffnung des Spindelkörpers eingesetzt sein, oder den Spindelkörper umgreifen. Des Weiteren sind Ratschenmechanismen bekannt, die eine Drehung des Hebels um den Spindelkörper entgegen einer Betätigungsrichtung freigeben und in einer Betätigungsrichtung blockieren.

Ein weiteres Beispiel einer bekannten Spannvorrichtung für Ketten zeigt die FR 2205152. Der Betätigungshebel der gezeigten Spannvorrichtung ist über ein Drehgelenk mit dem Spindelkörper verbunden. Nach einer Betätigung der Spannvorrichtung kann der Hebel somit umgeklappt bzw. nach der Längserstreckung der Spannvorrichtung ausgerichtet werden, um eine versehentliche Betätigung der Spannvorrichtung zu vermeiden und den Platzbedarf der Spannvorrichtung zu verringern.

Spannvorrichtungen der oben genannten Art dienen beispielsweise dem Verzurren von Ladungen bei Schwertransporten, wie Baumaschinen auf Ladeflächen von LKWs. Nach dem Einlegen zweier Abschnitte einer Kette oder zweier Ketten in die Kupplungselemente können die eine oder zwei Ketten durch Verdrehen des Spindelkörpers gegenüber den Kupplungselementen gespannt werden. Um ein unbeabsichtigtes Lösen der Spannvorrichtung zu vermeiden, das insbesondere bei Erschütterungen und Vibrationen durch selbsttätiges Ausdrehen der Kupplungselemente aus dem Spindelkörper entstehen kann, werden Lösesicherungen eingesetzt. Diese bestehen üblicherweise aus einer an einem Kupplungselement befestigten Sicherungskette, die durch Umwickeln des Betätigungshebels das Kupplungselement an dem Spindelkörper gegen Losdrehen sichert. Derartige Lösesicherungen sind umständlich zu bedienen. Die Gefahr von Bedienungsfehlern ist daher groß. Oft kann ein geringfügiges Ausdrehen der Kupplungselemente gegenüber dem Spindelkörper nicht verhindert werden

In der EP 0 848 189 A2 ist ein Beabstandungselement, wie es beispielsweise im Flugzeugbau eingesetzt wird, gezeigt. Es umfasst ein zylindrisches Gehäuse mit scheibenförmig ausgeformten Enden, die Löcher aufweisen. An jedem Ende des Gehäuses kann ein Kupplungselement eingeschraubt werden, so dass sich der Abstand zwischen den zwei Kupplungselementen einstellen lässt. Nach dem Einstellen des korrekten Abstandes wird ein weiteres Verdrehen der Kupplungselemente verhindert, indem ein ringförmiges Element, das eine nach innen und mehrere nach außen vorspringende Zähne aufweist, auf dem Kupplungselement verschoben wird. Der nach innen gerichtete Zahn greift in eine Rille des Kupplungselementes ein und stellt dadurch einen Formschluss her. Ein weiterer Formschluss wird durch einen Splint, der in die Löcher des Gehäuses und zwischen die nach außen ragenden Zähne des ringförmigen Elements geschoben wird, erzeugt. Mit einer Mutter wird das ringförmige Element an das Gehäuse gedrückt.

Die EP 1 671 527 A1 zeigt ein Verbindungselement, dessen Länge veränderbar eingestellt werden kann. Ein Formschluss zwischen einem Kupplungselement und einem Mittelteil wird durch einen umklappbaren Hebel, der über eine verschiebliche Hülse indirekt an dem Mittelteil angebracht ist, hergestellt. Dazu umgreift eine am Ende des Hebels angebrachte Öffnung ein vom Kupplungselement seitlich vorspringendes Element.

Aus der DE 10 2008 012 203 A1 sind Spannschlösser bekannt, bei denen ein Verdrehen der Kupplungselemente relativ zum Spindelkörper durch schwenkbare, gegebenenfalls Federkraft beaufschlagte Hebel, die in seitliche Formschlusselemente eingreifen, verhindert. Ferner ist ein an dem Spindelkörper angeordnetes Blockierelement gezeigt, das aus dem Spindelkörper herausgefahren werden kann und eine Rotation eines Kupplungselementes blockiert.

Aus der EP 1 588 975 A2 ist ein Abhängelement bekannt, bei dem eine eingestellte Länge durch ein mit Federkraft beaufschlagtes, in einem Mittelteil angeordnetes Sicherungselement, das eine kronenförmig ausgestaltete Stirnfläche aufweist und in formschlüssiger Verbindung mit einer ebenfalls kronenförmig ausgestalteten Stirnfläche eines Befestigungselementes steht, fixiert wird.

Folglich liegt der Erfindung die Aufgabe zugrunde, eine Spannvorrichtung für Ketten zu schaffen, die einfach und zuverlässig gegen ein unbeabsichtigtes Lösen gesichert werden kann.

Diese Aufgabe wird erfindungsgemäß für eine Spannvorrichtung der eingangs genannten Art dadurch gelöst, dass das Sicherungselement in der Sicherungsstellung zwischen dem wenigstens einen mit einem Kupplungsgewinde versehenen Kupplungselement und dem Spindelkörper eine formschlüssige Starrkörperkupplung herstellt, wobei das Sicherungselement in der Lösestellung drehstarr und in eine Längsrichtung verschieblich auf einem Kupplungselement angeordnet ist.

Das Sicherungselement bildet somit einen starren Körper, bzw. eine starre, nicht verformbare Kupplung, die formschlüssig an das Kupplungselement und an den Spindelkörper gekuppelt ist. Durch den formschlüssigen Eingriff des Sicherungselementes werden für die Sicherung der Spannvorrichtung keine aufwändigen Montagevorgänge mehr benötigt, wie das Umwickeln mit einer Sicherungskette. Statt dessen kann das Sicherungselement, das vorzugsweise von einem im Wesentlichen starren Körper gebildet ist, durch eine einfache Bewegung, die den Formschluss herstellt, beispielsweise eine Verschiebung oder Drehung, in die Sicherungsstellung überführt werden. Die Bedienerfreundlichkeit der Spannvorrichtung wird somit verbessert und die Gefahr von Bedienungsfehlern verringert.

Das Sicherungselement kann in die Sicherungsstellung überführt werden, indem es auf dem Kupplungselement in Richtung des Spindelkörpers in eine Position verschoben wird, in der das Sicherungselement formschlüssig und insbesondere drehstarr in den Spindelkörper eingreifen kann.

Die erfindungsgemäße Spannvorrichtung kann durch verschiedene, voneinander unabhängige, jeweils für sich vorteilhafte Ausgestaltungen weiterentwickelt werden. Auf diese Ausgestaltungen und die mit den Ausgestaltungen jeweils verbundenen Vorteile wird im Folgenden kurz eingegangen.

Gemäß einer ersten vorteilhaften Ausgestaltung einer Spannvorrichtung kann das Sicherungselement an der Spannvorrichtung zwischen der Sicherungsstellung und der Lösestellung beweglich geführt sein. Die Spannvorrichtung kann allein durch die geführte Bewegung des Sicherungselementes sicherbar sein. Die Sicherung der Spannvorrichtung nach einem Verzurren einer eingehängten Last ist somit weiter vereinfacht. Da die Bewegung des Sicherungselements geführt ist, ist die Wahrscheinlichkeit von Fehlbedienungen verringert.

Das Sicherungselement ist in der Sicherungsstellung vorzugsweise zwischen Spindelkörper und Kupplungselement angeordnet. Vorzugsweise grenzt das Sicherungselement in der Sicherungsstellung unmittelbar an Spindelkörper und Kupplungselement an. Des Weiteren kann sich das Sicherungselement formschlüssig an dem Spindelkörper abstützen. Für ein formschlüssiges Zusammenwirken von Spindelkörper und Sicherungselement kann das Sicherungselement formschlüssig in den Spindelkörper und/oder das Kupplungselement eingreifen und/oder durch zusätzliche Verbindungselemente formschlüssig mit dem Spindelkörper und/oder dem Kupplungselement verbindbar sein.

Um das Sicherungselement drehstarr mit dem Kupplungselement zu verbinden, können das Kupplungsgewinde und das Sicherungselement sich in Längsrichtung erstreckende, bezüglich einer Längsachse des Kupplungsgewindes nicht kreissymmetrische Halteprofile aufweisen, die drehstarr ineinander eingreifen. Mit "nicht kreissymmetrisch" ist gemeint, dass nicht bei jedem beliebigen Drehwinkel eine Drehung eines Halteprofils um die Längsachse das Halteprofil auf sich selbst abbildet. Bei bestimmten Drehwinkeln, beispielsweise bei 180°, können sich die Halteprofile jedoch auf sich selbst abbilden. Beispielsweise kann das Kupplungsgewinde mit einer Vertiefung versehen sein, die sich in Längsrichtung erstreckt. Das Sicherungselement kann mit einem komplementär zu der Vertiefung ausgestalteten Fortsatz ausgestaltet sein, der in die Vertiefung eingreift und das Sicherungselement gegen Verdrehen sichert. Vorzugsweise sind die Halteprofile symmetrisch zu wenigstens einer auf einer Längsachse oder einer Symmetrieachse des Kupplungsgewindes liegenden Symmetrieebene ausgestaltet, um Verkantungen der Halteprofile zu vermeiden.

Gemäß einer weiteren vorteilhaften Ausgestaltung einer erfindungsgemäßen Spannvorrichtung können das Kupplungsgewinde und das Sicherungselement nicht kreissymmetrische Halteprofile aufweisen, die sich in Längsrichtung erstrecken und komplementär zueinander ausgestaltet und ineinander liegend angeordnet sind. Beispielsweise können an dem Kupplungsgewinde und dem Sicherungselement Vertiefungen oder ebene Flächen vorgesehen sein. Somit kann durch einfache Geometrien des Kupplungsgewindes und des Sicherungselementes sichergestellt sein, dass eine Verschiebung des Sicherungselementes in Längsrichtung oder in Richtung des Spindelkörpers freigegeben ist, während eine Verdrehung um eine in Längsrichtung verlaufende Achse blockiert ist.

In einer weiteren vorteilhaften Ausgestaltung einer erfindungsgemäßen Spannvorrichtung kann das Halteprofil des Kupplungsgewindes von einem Gewindebolzen und das Halteprofil des Sicherungselementes von einer den Gewindebolzen aufnehmenden Öffnung gebildet sein. Beispielsweise kann das Sicherungselement scheibenförmig ausgestaltet und auf dem Gewindebolzen in Längsrichtung verschiebbar angeordnet sein. Für eine kostengünstige Fertigung kann das Sicherungselement aus einem Blech geformt sein.

Um sicherzustellen, dass das Sicherungselement nicht in das Kupplungsgewinde rutscht bzw. sich mit dem Kupplungsgewinde verkeilt, ist die Dicke des Sicherungselementes zumindest an seinem an dem Gewindebolzen angrenzenden Bereich vorzugsweise größer als die Steigung des Gewindes. Somit kann die nach innen weisende Fläche der Öffnung des Sicherungselementes als Führungsorgan dienen, das ein Gleiten des Sicherungselementes über das Gewinde ermöglicht.

Um eine drehstarre Verbindung zwischen dem Sicherungselement und dem Gewindebolzen herzustellen, können die Öffnung des Sicherungselementes und der Gewindebolzen jeweils mit wenigstens einem oder jeweils mit wenigstens zwei Formschlussorganen versehen sein, wobei die Formschlussorgane der Öffnung und des Gewindebolzens parallel zueinander angeordnet sind. Somit können die ineinandergreifenden Halteprofile des Kupplungsgewindes und des Sicherungselementes auf einfachste Weise herstellbar sein.

Ineinander greifende Formschlussorgane des Sicherungselementes und des Gewindebolzens können als Abflachungen, Vertiefungen und/oder Fortsätze ausgestaltet sein. Vorzugsweise bilden die Formschlussorgane des Sicherungselementes und/oder des Kupplungselementes ein symmetrisches Halteprofil. Alternativ oder zusätzlich können die Formschlussorgane symmetrisch bezüglich einer gemeinsamen Symmetrieachse oder einer Längsachse des Kupplungsgewindes angeordnet sein, um ein Verkanten des Sicherungselementes bei einer Verschiebung des Sicherungselementes auf dem Gewindebolzen zu vermeiden.

Für eine formschlüssige Verbindung des Sicherungselements mit dem Spindelkörper in der Sicherungsstellung können das Sicherungselement und der Spindelkörper Eingriffsflächen aufweisen, die parallel zueinander und gegenüber der Längsrichtung geneigt verlaufen und in der Sicherungsstellung des Sicherungselementes aufeinanderliegen.

Um einen stabileren Formschluss zwischen Sicherungselement und Spindelkörper zu gewährleisten, kann eine Vielzahl von Eingriffsflächen vorgesehen sein, die in der Sicherungsstellung aufeinanderliegend angeordnet sind. Alternativ oder zusätzlich kann das Sicherungselement wenigstens ein Formschlusselement aufweisen, das sich in der Sicherungsstellung formschlüssig mit einem komplementär ausgestalteten Formschlusselement des Spindelkörpers in Eingriff befindet.

In einer weiteren vorteilhaften Ausgestaltung einer erfindungsgemäßen Spannvorrichtung können Formschlusselemente des Sicherungselementes und des Spindelkörpers symmetrisch zu einer Längsachse des Kupplungsgewindes angeordnete Fortsätze und/oder Aussparungen umfassen, die in der Sicherungsstellung ineinandergreifen. Durch die zur Längsachse symmetrische Anordnung kann das Sicherungselement in der Sicherungsstellung in einer Vielzahl von Winkelstellungen an dem Spindelkörper angeordnet werden. Somit lässt sich die Winkelstellung der Kupplungselemente und damit die aufgebrachte Spannung genauer einstellen. Beispielsweise kann das Formschlusselement des Sicherungselementes kreuzförmig und symmetrisch zur Längsachse des Kupplungsgewindes ausgestaltet sein. Das Formschlusselement des Sicherungselementes kann als kreuzförmige Vertiefung geformt sein, in die wenigstens ein komplementär zu einer Vertiefung ausgestalteter Fortsatz oder eine komplementär ausgestaltete Vielzahl von Fortsätzen des Spindelkörpers aufnehmbar ist.

Um insbesondere in rauen Umgebungen, in welchen die Gefahr einer Verschmutzung oder Vereisung erhöht ist, die sichere Funktion der Spannvorrichtung zu gewährleisten, können von den Formschlusselementen gebildete Winkel vergrößert und insbesondere größer 90° sein. Ein kreuzförmig ausgestaltetes Formschlusselement kann vorzugsweise zwischen zwei Kreuzschenkeln einen Winkel von mehr als 90° aufweisen, um ein Ansammeln von Schmutz zu verhindern. Gemäß einer weiteren vorteilhaften Ausgestaltung der Formschlusselemente können diese klauenartig, beispielsweise in Form einer Klauenkupplung ausgestaltet sein. Die Klauen der Formschlusselemente können sich in oder entgegen der Längsrichtung erstrecken und ineinander eingreifen.

In einer weiteren vorteilhaften Ausgestaltung einer erfindungsgemäßen Spannvorrichtung können das Sicherungselement und/oder der Spindelkörper wenigstens einen Haltemagneten aufweisen, der in der Sicherungsstellung das Sicherungselement und den Spindelkörper durch eine magnetische Haltekraft verbindet. Das Sicherungselement ist somit der Sicherungsstellung gehalten, wobei der magnetische Kraftschluss zwischen Sicherungselement und Spindelkörper auch bei einer Verschmutzung der Spannvorrichtung funktioniert.

Um eine formschlüssige Sicherung des Sicherungselementes in der Sicherungsstellung zu ermöglichen, können in einer weiteren vorteilhaften Ausgestaltung das Sicherungselement und der Spindelkörper in der Sicherungsstellung wenigstens eine gemeinsame Durchgangsöffnung bilden. Die Durchgangsöffnung kann beispielsweise der Aufnahme eines Riegels oder eines Vorhängeschlosses dienen.

Vorzugsweise sind beide Kupplungselemente drehbar mit dem Spindelkörper verbunden, um eine Drehung des Spindelkörpers gegenüber den angeschlossenen Zugketten zu ermöglichen. Um die Spannvorrichtung bei Betätigung, beispielsweise durch einen mit dem Spindelkörper verbundenen Hebel, beidseitig zu verkürzen, kann die Spannvorrichtung vorzugsweise zwei zueinander gegenläufige Spindelgewinde umfassen, wobei beide Kupplungselemente ein Kupplungsgewinde aufweisen, das mit jeweils einem Spindelgewinde verschraubt ist. Da eine Drehung der Kupplungselemente bereits durch angeschlossene, mit einer Zugspannung beaufschlagte Zugketten gehemmt ist, kann vorzugsweise nur eines der Kupplungselemente mit einem erfindungsgemäßen Sicherungselement versehen sein. In dem das eine Sicherungselement in der Sicherungsstellung eine Relativdrehung zwischen dem zugeordneten Kupplungselement und dem Spindelkörper verhindert, kann auch der Spindelkörper relativ zur angeschlossenen Kette nicht verdreht werden. Das zweite Kupplungselement kann wiederum durch die angeschlossene Kette gegen eine Drehung gesichert sein, so dass die Spannvorrichtung sich nicht selbsttätig lösen kann.

Insbesondere, wenn das wenigstens eine Kupplungsgewinde von einem Gewindebolzen geformt ist, kann der Spindelkörper wenigstens einen an das wenigstens eine Spindelgewinde angrenzenden Hohlraum zur Aufnahme des Gewindebolzens aufweisen. Gemäß einer weiteren, auch für sich alleinstehend vorteilhaften Ausgestaltung der Spannvorrichtung kann der Hohlraum mit einer Wartungsöffnung versehen sein. Da die Wartungsöffnung eine Reinigung und auch eine Selbstreinigung der Gewinde ermöglicht, kann auf eine im Stand der Technik übliche Abdichtung des Spindelkörpers verzichtet werden. Die Wartungsöffnung kann vorzugsweise breiter als der Durchmesser des aufgenommenen Kupplungsgewindes sein, um eine Berührung zwischen Innenwänden des Hohlraums und dem Kupplungsgewinde zu vermeiden und das Herausfallen von an dem Gewinde befindlichen Schmutz zu erleichtern. Alternativ kann der Spindelkörper Außengewinde aufweisen, auf die Innengewinde der Kupplungselemente aufgeschraubt sind. In diesem Fall können die Kupplungselemente eine Wartungsöffnung zur Reinigung der Gewinde des Spindelkörpers aufweisen.

In einer weiteren vorteilhaften Ausgestaltung der Spannvorrichtung kann der Spindelkörper im Bereich des Hohlraums einen sich quer zur Längsrichtung öffnenden, U-förmigen Querschnitt aufweisen. Die Öffnung des U-förmigen Querschnitts kann die Wartungsöffnung bilden. Somit entsteht ein torsionssteifer Querschnitt, der sich auch bei größeren Betätigungsmomenten, die über einen Betätigungshebel aufgebracht werden können, nicht verformt.

Vorzugsweise sind der Hohlraum und/oder die Wartungsöffnung in den Spindelkörper eingeschmiedet. Das Schmieden des Hohlraums und der Wartungsöffnung kann insbesondere durch den oben genannten U-förmigen Querschnitt des Spindelkörpers erleichtert sein. Der Spindelkörper kann insbesondere durch Gesenkschmieden hergestellt sein.

Gemäß einer weiteren vorteilhaften Ausgestaltung einer erfindungsgemäßen Spannvorrichtung können Halteelemente vorgesehen sein, die zwischen dem Sicherungselement und dem Spindelkörper angeordnet sind und Sicherungselement und Spindelkörper formschlüssig verbinden. Die Halteelemente können beispielsweise schrauben- oder bolzenförmig ausgestaltet sein und das Sicherungselement und den Spindelkörper wenigstens abschnittsweise durchdringen, um einen Formschluss herzustellen.

Die Halteelemente können ferner in das Sicherungselement und/oder den Spindelkörper einhakbar oder einrastbar ausgestaltet sein. Um das Einhaken oder Einrasten zu erleichtern, können die Halteelemente elastisch dehnbar und/oder stauchbar sein. Somit können die Halteelemente zum Verbinden vom Sicherungselement und Spindelkörper elastisch in die Länge gezogen und/oder gestaucht werden und nach dem Verbinden vom Sicherungselement und Spindelkörper durch ihre elastische Vorspannung eine Haltekraft ausüben, so dass ein unbeabsichtigtes Lösen der Halteelemente durch deren elastische Längung vermieden ist.

Um die Betätigung der Spannvorrichtung zu vereinfachen bzw. eine störungsfreie Betätigung der Spannvorrichtung zu gewährleisten, kann das Sicherungselement in der Lösestellung oder in einer Parkstellung arretier- oder fixierbar ausgestaltet sein. Vorzugsweise kann wenigstens ein Haltemagnet vorgesehen sein, der das Sicherungselement in der Lösestellung hält. Der Haltemagnet kann in dem Kupplungselement zur Fixierung des Sicherungselementes an dem Kupplungselement oder vorzugsweise an dem Sicherungselement angeordnet sein.

Der Haltemagnet kann an dem Sicherungselement angeordnet sein und auf gegenüberliegenden Seiten des Sicherungselementes wirken. Somit kann der Haltemagnet sowohl zur Fixierung des Sicherungselementes in der Lösestellung als auch zur Fixierung des Sicherungselementes in der Sicherungsstellung dienen.

Alternativ oder zusätzlich kann das Sicherungselement über wenigstens eine Rastverbindung in der Sicherungsstellung und/oder in der Lösestellung gehalten sein. Beispielsweise kann das Sicherungselement und/oder das Anschlussorgan und/oder der Spindelkörper Rastelemente aufweisen, die elastisch auslenkbar sind und in Gegenrastelemente des Anschlussorgans, des Sicherungselementes und/oder des Spindelkörpers einrasten. Für eine formschlüssige Sicherung kann das Sicherungselement alternativ oder zusätzlich mit einer Sicherungsschraube versehen sein, die in der Sicherungsstellung in einer Haltenut oder Haltebohrung des Spindelkörpers eingreift. Die Sicherungsschraube kann beispielsweise als eine quer zu einer Sicherungsrichtung einschraubbare Rändelschraube ausgestaltet sein.

Für ein Höchstmaß an Sicherheit und um ein zufälliges oder unbeabsichtigtes Verstellen der Spannvorrichtung auszuschließen, kann die Spannvorrichtung ein Federelement aufweisen, das zwischen Spindelkörper und Sicherungselement angeordnet ist und das Sicherungselement in der Sicherungsstellung hält. Das Sicherungselement kann entgegen der Federkraft in die Lösestellung auslenkbar ausgestaltet sein, um eine Verstellung der Spannvorrichtung zu ermöglichen. Um das Sicherungselement in der Lösestellung für die Montage oder Spannung der Spannvorrichtung in der Lösestellung zu halten, kann das Sicherungselement in der Lösestellung mit dem Spindelkörper über Haltemagneten und/oder Rastverbindungen verbunden sein.

In einer weiteren, auch für sich allein stehend vorteilhaften Ausgestaltung einer erfindungsgemäßen Spannvorrichtung kann das Sicherungselement in das Kupplungselement und/oder den Spindelkörper einsteckbar ausgestaltet sein. Ist das Kupplungsgewinde in den Spindelkörper einschraubbar ausgestaltet, kann an dem Kupplungsgewinde oder an dem in den Spindelkörper hineinragenden Ende des Kupplungselementes eine Durchgangsöffnung vorgesehen sein, in die das Sicherungselement, das beispielsweise als Sicherungssplint oder Bolzen geformt sein kann, einsetzbar ist. Vorzugsweise weist der Spindelkörper bei dieser Ausgestaltung eine Wartungsöffnung auf, durch welche das Sicherungselement einsetzbar ist. Um eine Drehung des Kupplungsgewindes zu blockieren, kann sich das Sicherungselement an einer innen liegenden Fläche des Spindelkörpers abstützen oder im eingesetzten Zustand aus der Wartungsöffnung herausragen und sich am Rand der Wartungsöffnung abstützen.

Alternativ oder zusätzlich kann in dem Hohlraum des Spindelkörpers, in dem wenigstens ein eingeschraubter Abschnitt des Kupplungselementes aufgenommen sein kann, wenigstens eine Anschlagfläche angeordnet sein, die einen Anschlag für ein eingesetztes Sicherungselement bildet, um eine Drehung des Kupplungselementes zu blockieren. Um den Spindelkörper gegenüber den angeschlossenen Kupplungselementen zu drehen und somit die Spannvorrichtung zu verkürzen, kann der Spindelkörper einen Betätigungsabschnitt aufweisen, der zwischen den Kupplungselementen angeordnet ist. Vorzugsweise erstreckt sich der Spindelkörper wenigstens abschnittsweise symmetrisch von beiden Seiten des Betätigungsabschnittes weg. Der Spindelkörper kann zwei jeweils ein Spindelgewinde und wenigstens einen Hohlraum umfassende Kupplungsabschnitte aufweisen, die beidseits des Betätigungsabschnitts und symmetrisch zum Betätigungsabschnitt angeordnet sind. Der Betätigungsabschnitt kann zylindrisch ausgestaltet sein, um einen Ratschenhebel aufzunehmen. Alternativ kann der Betätigungsabschnitt eine Durchgangsöffnung aufweisen, in die ein stangenförmiger Betätigungshebel einführbar ist.

Gemäß einer weiteren vorteilhaften Ausgestaltung einer erfindungsgemäßen Spannvorrichtung kann die Spannvorrichtung mit einem Betätigungshebel versehen sein, der an dem Spindelkörper von einer Betätigungsstellung in eine Sicherungsstellung drehbar gelagert ist, wobei der Betätigungshebel ein Halteprofil aufweist, das in der Sicherungsstellung formschlüssig in ein Halteprofil eines in der Sicherungsstellung benachbart angeordneten Kupplungselementes eingreift. Somit kann der Betätigungshebel ein Sicherungselement bilden, das vorteilhaft beim Umklappen des Hebels nach einem Spannvorgang automatisch sichert.

Der Betätigungshebel kann gemäß einer weiteren Ausführungsform eine Werkzeugschnittstelle aufweisen. Die Werkzeugschnittstelle kann beispielsweise als Öffnung mit einem standardisierten Innenprofil oder als Fortsatz mit einem standardisierten Außenprofil geformt sein. Beispielsweise kann eine Öffnung mit einem Polygoninnenprofil oder ein Fortsatz mit einem Polygonaußenprofil vorgesehen sein. Vorzugsweise kann eine Öffnung mit einem standardisierten Vierkantprofil zur Aufnahme eines handelsüblichen Drehmomentschlüssels vorgesehen sein. Die Öffnung oder der Fortsatz kann sich in Längsrichtung der Spannvorrichtung und/oder in Längsrichtung des Spindelkörpers erstrecken.

Um den Drehmomentschlüssel außerhalb des Spindelkörpers mit dem Betätigungshebel verbinden zu können, kann die Werkzeugschnittstelle von dem Spindelkörper beabstandet an dem Betätigungshebel angeordnet sein. Bei einem Abstand B der Werkzeugschnittstelle von der Längsachse der Spannvorrichtung bzw. von einer Drehachse des Spindelkörpers und einer Hebellänge C des eingesetzten Drehmomentschlüssels ist somit für ein vorgegebenes Betätigungsmoment TE zur Spannung angeschlossener Verzurrmittel ein Drehmoment TS = TE x C : B + C über den Drehmomentschlüssel aufzubringen.

Im Folgenden wird die Erfindung anhand einer beispielhaften Ausführungsform mit Bezug auf die Figuren beispielhaft erläutert. Dabei stellt die beschriebene Ausführungsform lediglich eine mögliche Ausgestaltung dar, die für den jeweiligen Anwendungsfall modifiziert werden kann. Einzelne, für sich vorteilhafte Merkmale können gemäß der obigen Beschreibung der vorteilhaften Ausgestaltungen der beschriebenen Ausführungsform hinzugefügt oder weggelassen werden.

Es zeigen.
- Fig. 1: eine schematische Draufsicht eines Ausführungsbeispiels einer Spannvorrichtung;
- Fig. 2: eine schematische geschnittene Seitenansicht des Ausführungsbeispiels der Fig. 1 entlang der Schnittebene II-II
- Fig. 3: eine schematische geschnittene Teilansicht der Spannvorrichtung der Fig. 2, bei der sich das Sicherungselement in der Sicherungsstellung befindet;
- Fig. 4: eine schematische Teilansicht des Ausführungsbeispiels der Fig. 1;
- Fig. 5: eine geschnittene Seitenansicht gemäß der Schnittebene V-V der Fig. 4;
- Fig. 6: eine schematische geschnittene Seitenansicht des Ausführungsbeispiels der Fig. 1 entlang der Schnittebene VI-VI der Fig. 1;
- Fig. 7 bis 10: schematische perspektivische Teilansichten eines Ausführungsbeispiels der Erfindung gemäß Fig. 1;
- Fig. 11: eine geschnittene Teilansicht eines zweiten Ausführungsbeispiels einer erfindungsgemäßen Spannvorrichtung;
- Fig. 12: eine schematische Teilansicht eines dritten Ausführungsbeispiels einer erfindungsgemäßen Spannvorrichtung;
- Fig. 13: eine schematische Teilansicht eines vierten Ausführungsbeispiels einer erfindungsgemäßen Spannvorrichtung;
- Fig. 14: eine schematische Teilansicht eines fünften Ausführungsbeispiels einer erfindungsgemäßen Spannvorrichtung;
- Fig. 15: eine schematische, geschnittene Teilansicht eines sechsten Ausführungsbeispiels einer erfindungsgemäßen Spannvorrichtung;
- Fig. 16: eine schematische Schnittansicht gemäß der Schnittebene XVI-XVI der Fig. 15;
- Fig. 17: eine schematische Schnittansicht an der Schnittebene XVII-XVII der Fig. 15;
- Fig. 18: eine schematische Teilansicht eines siebten Ausführungsbeispiels einer erfindungsgemäßen Spannvorrichtung;
- Fig. 19: eine schematische Schnittansicht an der Schnittebene XIX-XIX der Fig. 18;
- Fig. 20: eine schematische Teilansicht eines achten Ausführungsbeispiels einer erfindungsgemäßen Spannvorrichtung;
- Fig. 21: eine schematische Schnittansicht an der Stelle XXI-XXI der Fig. 20;
- Fig. 22: eine schematische Schnittansicht eines neunten Ausführungsbeispiels einer erfindungsgemäßen Spannvorrichtung;
- Fig. 23: eine schematische Teilansicht eines zehnten Ausführungsbeispiels einer erfindungsgemäßen Spannvorrichtung;
- Fig. 24: eine schematische Seitenansicht eines Betätigungshebels für eine erfindungsgemäße Spannvorrichtung;
- Fig. 25: eine schematische Teilansicht eines elften Ausführungsbeispiels einer erfindungsgemäßen Spannvorrichtung;
- Fig. 26: eine schematische, geschnittene Teilansicht gemäß der Schnittebene XXVI-XXVI der Fig. 25;
- Fig. 27: eine schematische Teilansicht eines zwölften Ausführungsbeispiels einer erfindungsgemäßen Spannvorrichtung;
- Fig. 28: eine schematische, geschnittene Ansicht des Ausführungsbeispiels der Fig. 27 an der Stelle XXVIII-XXVIII.

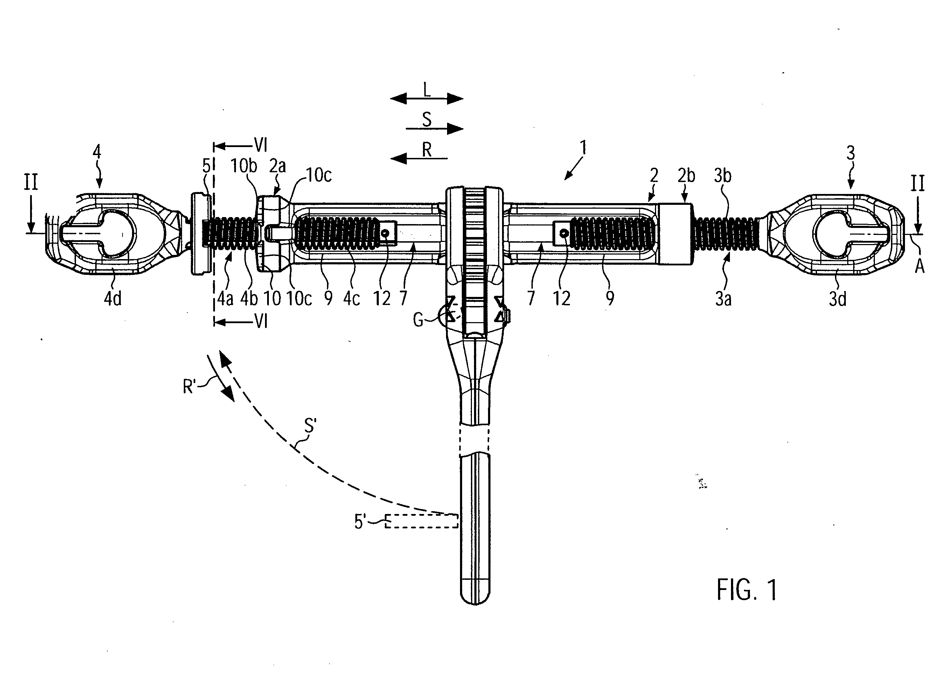

Zunächst wird der Aufbau einer erfindungsgemäßen Spannvorrichtung mit Bezug auf das Ausführungsbeispiel der Fig. 1 beschrieben.

Die Spannvorrichtung 1 umfasst einen Spindelkörper 2, der an seinen in Längsrichtung L gegenüberliegenden Enden mit Kupplungselementen 3 und 4 verschraubt ist. Auf dem Kupplungselement 4 ist ein Sicherungselement 5 in Längsrichtung L verschieblich und drehstarr angeordnet. Des Weiteren umfasst die Spannvorrichtung 1 einen Betätigungshebel 6, der sich mittig an dem Spindelkörper 2 quer zur Längsrichtung L von dem Spindelkörper 2 weg erstreckt.

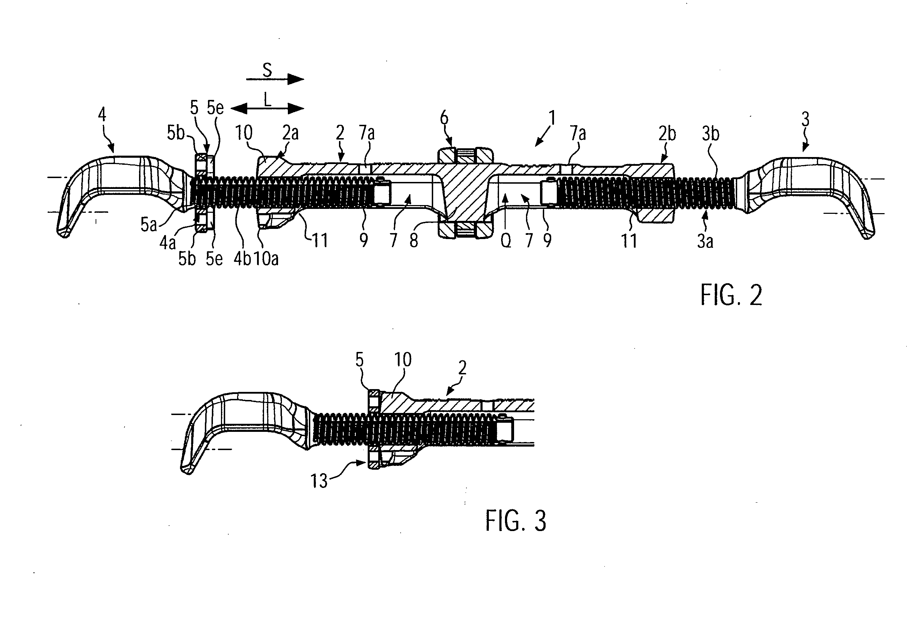

Der Spindelkörper 2 ist im Wesentlichen zylindrisch geformt und mit Hohlräumen 7 versehen, die zur Aufnahme von Gewindebolzen 3a und 4a der Kupplungselemente 3 und 4 dienen. Die Hohlräume 7 sind beidseitig eines in Fig. 2 gezeigten Betätigungsabschnittes 8 angeordnet, an welchem der in dem Ausführungsbeispiel als Ratschenhebel ausgestaltete Betätigungshebel 6 angreift. Die Hohlräume 7 sind quer zur Längsrichtung L durch Wartungsöffnungen 9 nach außen hin geöffnet. Die Wartungsöffnungen 9 sind breiter als die Gewindebolzen 3a, 4a und erleichtern somit das Entfernen von Verschmutzungen an dem Gewindebolzen 3a, 4a bzw. an den von den Gewindebolzen 4a, 3a gebildeten Kupplungsgewinden 3b, 4b. Des Weiteren erleichtern die Wartungsöffnungen 9 die Montage von Sicherungsbolzen 12, die in Bohrungen der Gewindebolzen 4a eingesetzt werden können, um die Gewindebolzen 3a, 4a gegen Ausdrehen zu sichern.

Der Spindelkörper 2 ist vorzugsweise durch Gießen und/oder Schmieden hergestellt. Die Hohlräume 7 sind vorzugsweise in den Spindelkörper 2 eingeschmiedet und insbesondere durch Gesenkschmieden hergestellt.

An gegenüberliegenden Enden 2a, 2b ist der Spindelkörper 2 mit Innengewinden ausgestattet, in welche jeweils ein Gewindebolzen 3a, 4a eingeschraubt ist. Die Kupplungsgewinde 3b und 4b der Gewindebolzen 3a, 4a und die (hier nicht gezeigten) Spindelgewinde des Spindelkörpers 2 sind als metrische Trapezgewinde ausgeführt. Alternativ können die Spindelgewinde als metrische Spitzgewinde ausgestaltet sein.

An einem in Längsrichtung L weisenden Ende 2a ist der Spindelkörper 2 mit einem Formschlusselement 10 versehen. Das Formschlusselement 10 ist abschnittsweise komplementär zu einem Formschlusselement des Sicherungselements 5 ausgestaltet, um eine drehstarre Verbindung zwischen dem Spindelkörper 2 und dem Sicherungselement 5 zu ermöglichen. Eine drehstarre Verbindung zwischen den Gewindebolzen 4a bzw. dem Kupplungsgewinde 4b und dem Sicherungselement 5 wird wiederum durch ein Formschlussorgan 4c auf dem Gewindebolzen 4a ermöglicht, die sich in Längsrichtung L über die gesamte Länge des Gewindebolzens 4a erstreckt. Ein in einer Durchgangsöffnung des Sicherungselements 5 zur Aufnahme des Gewindebolzens 4a vorgesehener, parallel zum Formschlussorgan 4c verlaufender Fortsatz hindert das Sicherungselement 5 an einer Drehung um den Gewindebolzen 4a.

Beide Kupplungselemente 3, 4 sind einteilig geformt, wobei jeweils an einer dem Spindelkörper 2 abgewandten Ende der Gewindebolzen 3a, 4a Anschlussorgane 3d, 4d angeordnet sind. Die Anschlussorgane 3d, 4d können beispielsweise als Verkürzungsklauen oder Verkürzungshaken ausgestaltet sein. Anstelle der Anschlussorgane 3d, 4d können alternativ geschlossene Ösen, mit Sicherungsbolzen verschließbare Ösen oder Gabelköpfe vorgesehen sein.

Indem die Hohlräume 7 breiter als der Außendurchmesser der Kupplungsgewinde 3b, 4b dimensioniert ist, ist sichergestellt, dass die Gewindebolzen 3a, 4b während des Einschraubens in den Spindelkörper 2 die Innenwand des Spindelkörpers 2 nicht berühren und/oder keine Kräfte auf die Innenwände des Spindelkörpers 2 ausüben, die zu einer Blockierung der Spannvorrichtung 1 führen könnten.

Das Sicherungselement 5 ist in eine Sicherungsrichtung S verschieblich und drehstarr auf den Gewindebolzen 4a geführt. Der Gewindebolzen 4a bzw. das Kupplungsgewinde 4b bildet somit ein Führungsorgan, durch das das Sicherungselement 5 in Sicherungsrichtung S bis zu einer Sicherungsstellung, in der eine Drehung des Kupplungsgewindes 4b um eine Längsachse A des Kupplungsgewindes 4b gegenüber dem Spindelgewinde blockiert ist, geführt ist. Die Längsachse A bildet eine Symmetrieachse der Kupplungsgewinde 3b und 4b und somit zugleich eine Drehachse der Kupplungselements 3, 4 bzw. des Spindelkörpers 2.

In der Sicherungsstellung bildet das Sicherungselement 5 zwischen Kupplungsgewinde 4b und dem Spindelkörper 2 eine formschlüssige Starrkörperkupplung, d.h. der zwischen Kupplungsgewinde 4b und Spindelkörper 2 angeordnete Abschnitt des Kupplungselementes ist starr. Um die Spannvorrichtung 1 zu entsichern, wird das Sicherungselement 5 in einer Löserichtung R, die der Sicherungsrichtung S entgegengerichtet ist, auf dem als Führungsorgan wirkenden Gewindebolzen 4a verschoben.

Das Formschlusselement 10 weist Fortsätze 10b auf, an denen Eingriffsflächen 10c angeordnet sind. Die Eingriffsflächen 10c liegen in der Sicherungsstellung des Sicherungselementes 5 an in Fig. 2 gezeigten innen liegenden Eingriffsflächen 5e des Sicherungselementes 5 an.

In einer weiteren möglichen Ausgestaltung einer erfindungsgemäßen Spannvorrichtung kann der Betätigungshebel 6 als Führungsorgan dienen, durch das ein Sicherungselement 5' von einer Lösestellung, in der das Kupplungsgewinde 4a gegenüber dem Spindelgewinde drehbar ist, in eine Sicherungsstellung, in der Drehung des Kupplungsgewindes 4a gegenüber dem Spindelgewinde formschlüssig blockiert ist, geführt ist. Der Betätigungshebel 6 kann mit einem Gelenk G versehen sein, das ein Umklappen des Hebels in Sicherungsrichtung S' ermöglicht. Ein an dem Betätigungshebel 6 angeordnetes Sicherungselement 5', das in Fig. 1 symbolisch durch einen gestrichelten Umriss dargestellt ist, kann somit durch ein Umklappen des Betätigungshebels 6 in Sicherungsrichtung S' auf das Kupplungselement 4 bewegt werden. Auf diese Weise kann der Betätigungshebel 6 von einer Betätigungsstellung in eine Sicherungsstellung gedreht werden, wobei das Sicherungselement 5 in der Sicherungsstellung formschlüssig in ein benachbart angeordnetes Kupplungselementes 4 eingreift.

Beispielsweise kann das Sicherungselement 5' gabelartig gestaltet sein und den Gewindebolzen 4a in einer Sicherungsstellung, in welcher der Betätigungshebel 6 umgeklappt ist, umgreifen. Wenigstens ein Formschlussorgan 4c auf dem Kupplungsgewinde 4b kann in der Sicherungsstellung an dem Sicherungselement anliegen, so dass der Gewindebolzen 4a gegen Drehen gesichert ist. Indem der Betätigungshebel 6 in Löserichtung R' zurückgeklappt wird, kann das Sicherungselement 5' von der Sicherungsstellung zurück in die Lösestellung geführt werden. Der gelenkig gelagerte Betätigungshebel 6 dient somit als Führungsorgan für das Sicherungselement 5'.

Fig. 2 ist eine geschnittene Seitenansicht des Ausführungsbeispiels einer erfindungsgemäßen Vorrichtung 1. Zwischen den geschmiedeten Hohlräumen 7 des Spindelkörpers 2 ist ein Betätigungsabschnitt 8 angeordnet, der von dem als Ratschenhebel ausgestalteten Betätigungshebel 6 umgriffen ist. Die Hohlräume 7 sind jeweils mit Ausschlagöffnungen 7a versehen, die ein Ausschlagen der Sicherungsbolzen 12 ermöglichen, um die Spannvorrichtung 1 zu demontieren. Des Weitern erlauben die Ausschlagöffnungen 7a einen Ablauf von Flüssigkeiten aus den Hohlräumen 7, wenn die Wartungsöffnungen 9 nach oben weisen.

Die Hohlräume 7 sind wannenförmig ausgestaltet, wobei sich der Querschnitt der Hohlräume 7 in einer Querrichtung Q verringert. Somit ist die Formgebung der Hohlräume 7 für eine umformende Herstellung optimiert. Durch das Schmieden des Spindelkörpers 2 sind die Festigkeit und/oder Steifigkeit des Spindelkörpers 2 maßgeblich erhöht, so dass auch bei Aufbringen eines Betätigungsmomentes durch den Betätigungshebel 6 keine übermäßige Torsion des Spindelkörpers 2 auftritt.

Der Spindelkörper 2 weist an seinen in oder entgegen der Längsrichtung L weisenden Enden 2a, 2b Spindelgewinde 11 auf, in die die Kupplungsgewinde 3b, 4b aufgenommen sind. Das Sicherungselement 5 ist in einer Lösestellung gezeigt, in der das Kupplungsgewinde 4b gegenüber dem zugeordneten Spindelgewinde 11 drehbar ist. Erst durch Verschieben des drehstarr mit dem Kupplungsgewinde 4b verbundenen Sicherungselementes 5 in Sicherungsrichtung S bis auf das Formschlusselement 10 entsteht eine drehstarre Verbindung zwischen Kupplungsgewinde 4b und Spindelkörper 2, die ein unbeabsichtigtes Herausdrehen des Kupplungselementes 4 aus dem Spindelkörper 2 blockiert. Der Gewindebolzen 4a bildet dabei mit dem in Fig. 1 gezeigten Formschlussorgan 4c ein Halteprofil, das in ein durch eine Öffnung 5a des Sicherungselementes 5 gebildetes Halteprofil eingreift.

Um auch das Kupplungselement 3 gegen Herausdrehen aus dem Spindelkörper 2 zu sichern, kann auch an dem Ende 2b ein Formschlusselement 10 und ein Sicherungselement 5 vorgesehen werden. Des Weiteren gestatten die Wartungsöffnungen 9 die Montage der Sicherungsbolzen 12 in den Kupplungsgewinden 3b und/oder 4b, die sich an den in Längsrichtung L weisenden Innenwänden des Hohlraums 7 abstützen können, um den Gewindebolzen 3a und/oder 4a gegen Ausdrehen aus dem Spindelkörper 2 zu sichern.

In das Sicherungselement 5 können eine oder mehrere Bohrungen 5b eingebracht sein, die in der Sicherungsstellung mit einer Bohrung 10a an dem Formschlusselement 10 des Spindelkörpers 2 fluchten. Somit entsteht in der Sicherungsstellung die in Fig. 3 gezeigte Durchgangsöffnung 13, in die ein Riegel oder ein Vorhängeschloss eingesetzt werden kann, um das Sicherungselement 5 an dem Formschlusselement 10 des Spindelkörpers 2 zu sichern.

Die Eingriffflächen 5e liegen hinter dem Formschlusselement 10 an den in Fig. 1 gezeigten Eingriffflächen 10c des Formschlusselementes 10 an und sind daher in der in Fig. 3 gezeigten Schnittansicht verdeckt.

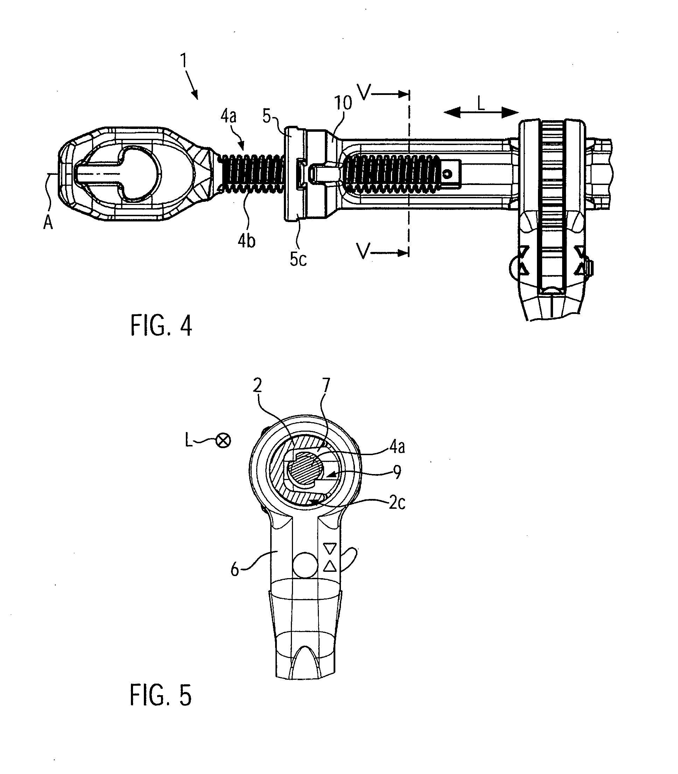

Fig. 4 ist eine Teilansicht einer Draufsicht auf die Spannvorrichtung 1, wobei sich das Sicherungselement 5 in der Sicherungsstellung befindet. Das Sicherungselement 5 umfasst einen Rand 5c, der in der gezeigten Sicherungsstellung nahezu bündig mit dem Formschlusselement 10 abschließt und auf dessen Innenseiten die in Fig. 2 gezeigten Eingriffsflächen 5e angeordnet sind. Somit weist das Sicherungselement 5 eine im Wesentlichen hohle Gestalt auf, in die das Formschlusselement 10 aufnehmbar ist.

Fig. 5 ist eine Schnittansicht der Spannvorrichtung 1 entlang der Schnittebene V-V der Fig. 4. Der Spindelkörper 2 weist im Bereich des Hohlraums 7 einen im Wesentlichen U-förmigen Querschnitt 2c auf, der den in den Hohlraum 7 aufgenommenen Gewindebolzen 4a umgibt. Der U-förmige Querschnitt 2c öffnet sich quer zur Längsrichtung L trichterförmig. Die Breite des Hohlraums 7 nimmt ausgehend von einem Boden des Hohlraums 7 in Richtung der Wartungsöffnung 9 zu.

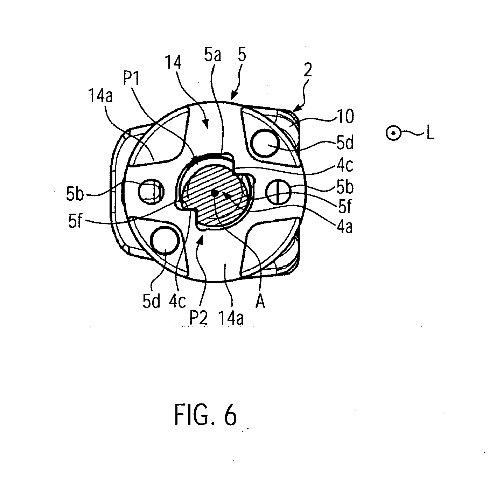

Fig. 6 ist eine Schnittansicht der Spannvorrichtung 1 an der Stelle VI-VI der Fig. 1. Das Sicherungselement 5 bildet ein Formschlusselement 14, das sich in der Sicherungsstellung mit dem Formschlusselement 10 des Spindelkörpers 2 im Eingriff befindet. Das Formschlusselement 14 ist kreuzförmig und abschnittsweise symmetrisch zu einer Längsachse A des Kupplungsgewindes 4b ausgestaltet. Jeweils zwei Kreuzschenkel 14a des Formschlusselementes 14 schließen einen Winkel ein, der idealerweise größer 90° ist, um ein Hängenbleiben von Schmutzpartikeln zu verhindern.

Aufgrund seiner bezüglich der Längsachse A symmetrischen Ausgestaltung kann das Formschlusselement 14 in einer Vielzahl von möglichen Sicherungspositionen auf das Formschlusselement 10 aufgesetzt werden. Durch die kreuzförmige Gestaltung des Formschlusselementes 14 können vier unterschiedliche Winkelpositionen durch das Formschlusselement 14 eingenommen werden, die jeweils einen Abstand von 90° haben. Um kleinere Winkelunterteilungen zu erreichen, kann das Formschlusselement 14 mit einer größeren Anzahl von Unterteilungen ausgestaltet werden. Alternativ zu der kreuzförmigen Gestaltung des Formschlusselementes 14 kann das Formschlusselement 14 beispielsweise auch nach Art einer Klauenkupplung ausgestaltet sein, bei der Fortsätze in gegenüberliegende Aussparungen eingreifen.

Das Formschlussorgan 4c des Kupplungsgewindes 4b liegt an einem Formschlussorgan 5f der Öffnung 5a an. Die Flächenpaarung der Formschlussorgane 4c und 5f sperrt den Gewindebolzen 4a in der Sicherungsstellung gegen eine Drehung. Die Öffnung 5a mit dem Formschlussorgan 5f bildet ein Halteprofil P2, das Kupplungsgewinde 4b mit dem Formschlussorgan 4c bildet ein Halteprofil P1. Die Halteprofile P1 und P2 erstrecken sich jeweils in Längsrichtung L und greifen drehstarr ineinander ein. Die Halteprofile P1 und P2 sind symmetrisch zu einer auf der Längsachse A des Gewindebolzens 4a liegenden Symmetrieebene (nicht gezeigt) ausgestaltet, um Verkantungen der Halteprofile zu vermeiden. Entsprechend sind auch die Formschlussorgane 4c und 5f sind jeweils symmetrisch zu einer auf der Längsachse A des Gewindebolzens 4a liegenden Symmetrieebene angeordnet.

Um eine sichere Halterung des Sicherungselementes 5 in der Sicherungsstellung zu gewährleisten, ist das Sicherungselement 5 mit Haltemagneten 5d versehen, die diagonal zueinander an dem Sicherungselement angeordnet sind und in der Sicherungsstellung an dem Formschlusselement 10 des Spindelkörpers 2 anhaften.

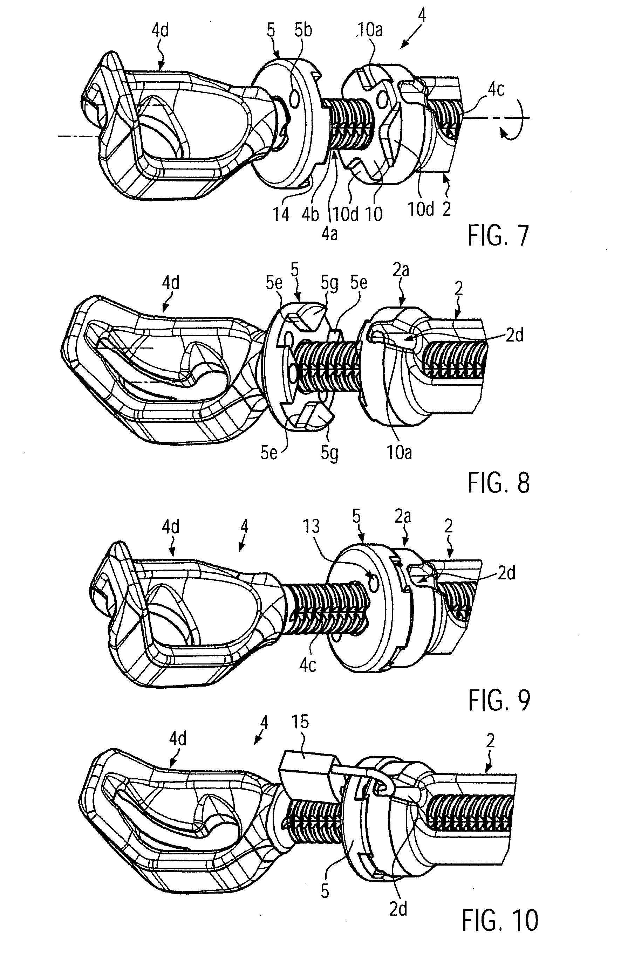

Fig. 7 ist eine perspektivische Teilansicht des Endes der Spannvorrichtung der Fig. 1, an dem das Sicherungselement 5 angeordnet ist. Das Sicherungselement 5 befindet sich einer Lösestellung, in welcher der Gewindebolzen 3a gegenüber dem (hier nicht gezeigten) Spindelgewinde des Spindelkörpers 2 drehbar ist. Des Weiteren befindet sich das Sicherungselement in einer Parkstellung an dem von dem Spindelkörper 2 abgewandten Ende des Gewindebolzens 3a. Ist das Sicherungselement 5 in der Parkstellung angeordnet, kann das Kupplungsgewinde 4b bzw. der Gewindebolzen 4a des Kupplungselementes 4 bis zu einer minimalen Spannlänge des Kupplungselementes 4 in den Spindelkörper 2 hineingeschraubt werden.

Ist durch ein Verdrehen des Spindelkörpers 2 das Kupplungselement 4 so weit in den Spindelkörper 2 hineingeschraubt, dass eine angestrebte Spannung der angeschlossenen Zugmittel erreicht ist, wird der Spindelkörper 2 soweit in einer Spannrichtung W oder entgegen einer Spannrichtung W verdreht, bis das von dem Sicherungselement 5 gebildet Formschlusselement 14 nach dem Formschlusselement 10 des Spindelkörpers 2 ausgerichtet ist. Anschließend kann das Sicherungselement 5 in Richtung des Spindelkörpers 2 verschoben werden, bis es formschlüssig in den Spindelkörper 2 eingreift.

Ferner kann der Spindelkörper 2 vor der Überführung des Sicherungselementes 5 in die Sicherungsstellung so weit verdreht werden, bis eine der Bohrungen 5b des Sicherungselementes 5 mit einer Bohrung 10a des Spindelkörpers 2 fluchtet. Somit bilden nach dem Verschieben des Sicherungselementes 5 in die Sicherungsstellung das Sicherungselement 5 und der Spindelkörper 2 eine in den Fig. 9 und 10 gezeigte Durchgangsöffnung 13, in die beispielsweise das in Fig. 10 gezeigte Vorhängeschloss 15 eingesetzt werden kann.

Die in Fig. 8 gezeigte Innenseite des Sicherungselementes 5, die dem Spindelkörper 2 zugewandt ist, weist im Wesentlichen dreieckförmige Fortsätze auf, die sich in Richtung des Spindelkörpers 2 erstrecken und an denen die Eingriffsflächen 5e angeordnet sind. Die Fortsätze 5g des Sicherungselementes 5 sind komplementär zu in Fig. 7 gezeigten Aussparungen 10d an dem Spindelkörper 2 ausgestaltet und reichen in der in den Fig. 9 und 10 gezeigten Sicherungsstellung des Sicherungselementes 5 formschlüssig in die Aussparungen 10d ein.

Das im Wesentlichen zylindrisch geformte, dem Sicherungselement 5 zugewandte Ende 2a des Spindelkörpers 2 weist eine kanalförmige Vertiefung 2d auf, die sich in Richtung der an ihrem Ende angeordneten Bohrung 10a erstreckt. Wie in Fig. 10 gezeigt, bietet die Vertiefung 2d Platz für den Bügel eines Vorhängeschlosses 15, um die Montage eines Vorhängeschlosses 15 zu vereinfachen.

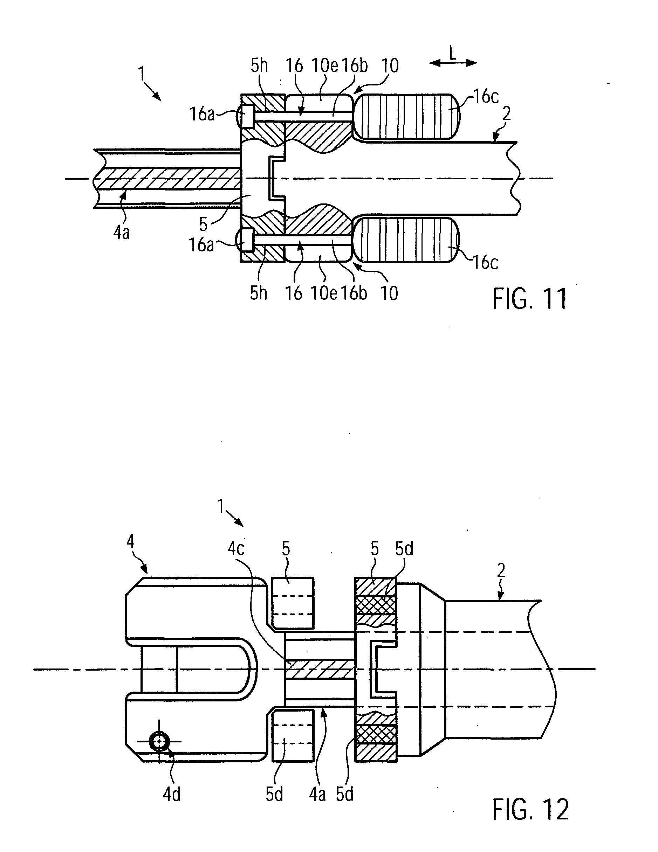

Fig. 11 zeigt ein weiteres Ausführungsbeispiel einer erfindungsgemäßen Spannvorrichtung, wobei für Elemente, die in Funktion und Aufbau den Elementen des Ausführungsbeispiels der Fig. 1 bis 10 entsprechen dieselben Bezugszeichen verwendet werden. Der Kürze halber wird auf die Unterschiede zum Ausführungsbeispiel der Fig. 1 bis 10 eingegangen.

Das Sicherungselement 5 ist über Halteelemente 16 an dem Spindelkörper 2 fixiert. Die Halteelemente 16 sind formschlüssig in das Sicherungselement 5 eingesetzt. Beispielsweise können die Halteelemente 16, wie in Fig. 11 gezeigt, wenigstens abschnittsweise ähnlich einer Schraube geformt sein und in Durchgangsöffnungen 5h des Sicherungselementes 5 eingesetzt sein. Die Halteelemente 16 können mit Formschlusselementen 16a versehen sein, die in der Sicherungsstellung des Sicherungselementes 5 formschlüssig in das Sicherungselement 5 eingreifen. Weitere Formschlusselemente 16c der Halteelemente 16 liegen in der Sicherungsstellung formschlüssig auf dem Formschlusselement 10 des Spindelkörpers 2 auf.

Die Formschlusselemente 16a und 16c des Halteelementes 16 sind über einen Verbindungsabschnitt 16b miteinander verbunden. In der in Fig. 11 gezeigten Sicherungsstellung der Spannvorrichtung 1 durchdringen die Halteelemente 16 das Sicherungselement 5 und das angrenzende Formschlusselement 10. Zur Aufnahme der Verbindungsabschnitte 16b ist das Formschlusselement 10 des Spindelkörpers 2 mit schlitzförmigen Aussparungen 10e versehen, in welche die Verbindungsabschnitte 16b von außen einlegbar sind.

Vorzugsweise sind die Halteelemente 16 aus einem elastischen Material geformt, beispielsweise einem Elastomer, um das Einlegen der Halteelemente 16 in radialer Richtung in die Aussparungen 10e des Formschlusselementes 10 zu vereinfachen. Somit kann ein Halteelement 16 bei der Fixierung des Sicherungselementes 5 elastisch gelängt werden, bis ein Einlegen des Verbindungsabschnitts 16b in die Aussparung 10e oder ein Hintergreifen des Formschlusselementes 16c hinter das Formschlusselement 10 möglich ist. Die Formschlusselemente 16c, die in der Sicherungsstellung das Formschlusselement 10 des Spindelkörpers 2 in Längsrichtung L hintergreifen, können als Griffe mit einer profilierten Oberfläche ausgestaltet sein, um das Greifen der Halteelemente 16 für ihre elastische Längung zu erleichtern.

Fig. 12 zeigt ein drittes Ausführungsbeispiel, wobei für Elemente, deren Funktion und Aufbau den Elementen der oben beschriebenen Ausführungsbeispiele entsprechen, erneut dieselben Bezugszeichen verwendet werden. Das Anschlussorgan 4d der Spannvorrichtung 1 ist beispielhaft als Gabelkopf ausgestaltet, dessen gabelförmiges Ende zum Anschließen einer Kette mit einem Bolzen verschließbar ist.

Das auf dem Gewindebolzen 4a des Kupplungselementes 4 verschiebbar angeordnete Sicherungselement 5 ist mit Haltemagneten 5d versehen, die an gegenüberliegenden Enden des Sicherungselementes 5 wirken. Während in einer Lösestellung des Sicherungselementes 5, die einer Parkstellung entspricht, das Sicherungselement 5 an dem Kupplungsanschlussorgan 4d anliegt und durch die Haltemagneten 5d an dem Anschlussorgan 4d gehalten ist, wirken die Haltemagneten 5d in der Sicherungsstellung auf den Spindelkörper 2 und fixieren somit das Sicherungselement 5 an dem Spindelkörper 2. Das Sicherungselement 5 ist in der Löse- oder Parkstellung gestrichelt und in der Sicherungsstellung mit durchgezogenen Linien dargestellt.

Indem das Sicherungselement 5 in der Lösestellung an dem Anschlussorgan 4d gehalten ist, kann der Spindelkörper 2 während des Spannens der angeschlossenen Verzurrmittel ungestört verdreht werden, ohne dass durch ein Verrutschen des Sicherungselementes 5 ein Blockieren des Spindelkörpers 2 auftreten kann.

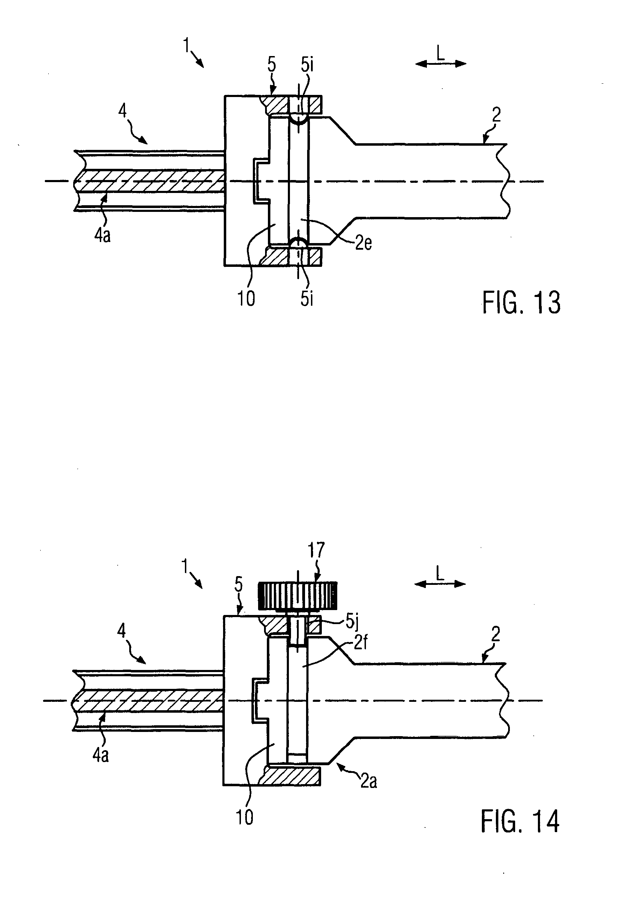

Fig. 13 zeigt ein viertes Ausführungsbeispiel, wobei für Elemente gleicher Funktion und gleichen Aufbaus erneut dieselben Bezugszeichen verwendet werden. Das Sicherungselement 5 umfasst in dem gezeigten Ausführungsbeispiel elastisch auslenkbare Rastelemente 5i, die in der gezeigten Sicherungsstellung des Sicherungselementes 5 in einer als Rastnut ausgestaltete Gegenraste 2e des Spindelkörpers 2 einrasten. Die Rastelemente 5i rasten in einer radialen Richtung und quer zur Längsrichtung L in die Gegenraste 2e ein und fixieren somit das auf dem Gewindebolzen 4a geführte Sicherungselement 5 in der Sicherungsstellung.

Die Rastelemente 5i sind vorzugsweise mit Federelementen versehen, welche die Rastelemente 5i in eine Raststellung drücken, in der die Rastelemente 5i aus dem Sicherungselement 5 herausgedrückt sind bzw. in die Gegenraste 2e eingreifen. Die Rastelemente 5i können in Bohrungen des Sicherungselementes 5 verschieblich geführt sein. Beispielsweise können Sacklochbohrungen vorgesehen sein, auf deren Boden Federelemente eingesetzt werden, um anschließend in die Bohrungen eingesetzte Rastelemente in Richtung der Öffnung der Sacklochbohrung zu drücken.

Fig. 14 zeigt ein fünftes Ausführungsbeispiel einer erfindungsgemäßen Spannvorrichtung, wobei der Einfachheit halber für Elemente, die in Funktion und Aufbau den Elementen der oben beschriebenen Ausführungsbeispiele entsprechen, erneut die gleichen Bezugszeichen verwendet werden.

Das Sicherungselement 5 ist mit einer durchgängigen Gewindebohrung 5j versehen, in die eine Sicherungsschraube 17 eingeschraubt ist. Die Sicherungsschraube 17 durchdringt das Sicherungselement 5 und erstreckt sich in eine quer zur Längsrichtung L umlaufende Haltenut an dem Ende 2a des Spindelkörpers 2. Anstelle der Haltenut 2f kann auch eine oder eine Vielzahl von Bohrungen vorgesehen sein, in die das Ende der Sicherungsschraube 17 einsetzbar ist.

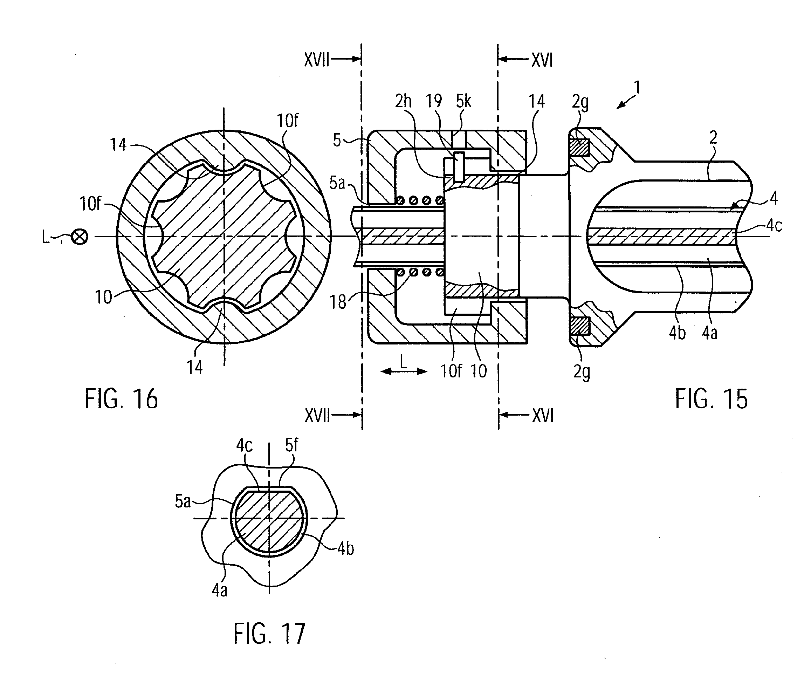

Fig. 15 bis 17 zeigen ein sechstes Ausführungsbeispiel einer erfindungsgemäßen Spannvorrichtung ein, wobei für Elemente, die in Funktion und Aufbau den Elementen der oben beschriebenen Ausführungsbeispiele entsprechen, dieselben Bezugszeichen verwendet werden.

Das Sicherungselement 5 der Fig. 15 ist wie in den vorangegangenen Ausführungsbeispielen in Längsrichtung L verschieblich und drehstarr auf dem Kupplungsgewinde 4b geführt und zwischen einer Lösestellung, in der das Kupplungsgewinde 4b gegenüber dem Spindelgewinde drehbar ist, und einer Sicherungsstellung, in der eine Drehung des Kupplungsgewindes blockiert ist, verschieblich. Das Sicherungselement 5 ist in einer Zwischenstellung zwischen Sicherungsstellung und Lösestellung gezeigt.

Ein Federelement 18, das zwischen Spindelkörper 2 und Sicherungselement 5 wirkt, drückt das Sicherungselement 5 in die Sicherungsstellung. In der Sicherungsstellung stößt das Sicherungselement 5 an seiner Innenseite gegen ein Anschlusselement 19, das beispielhaft als Bolzen dargestellt ist. Das bolzenförmige Anschlagelement 19 ist quer zur Längsrichtung L in eine Bohrung des Spindelkörpers 2 eingesetzt. Um das Anschlagelement 19 in die Bolzenbohrung 2h einsetzen zu können, weist das Sicherungselement 5 eine Montageöffnung 5k auf, durch welche die Bolzenbohrung 2h bei montiertem Sicherungselement 5 von außen zugänglich ist.

Indem das Sicherungselement 5 in Richtung des Spindelkörpers 2 verschoben wird, kann das Sicherungselement 5 in eine Lösestellung überführt werden, in der die Formschlusselemente 14 außerhalb des Formschlusselementes 10 angeordnet sind. Zur Arretierung des Sicherungselementes 5 in der Lösestellung ist in den Spindelkörper 2 ein Haltemagnet 2g eingesetzt, der das Sicherungselement 5 entgegen der Federkraft des Federelementes 18 in der Lösestellung hält. In der Lösestellung liegt das Sicherungselement 5 vorzugsweise an dem Haltemagneten 2g an. Somit befinden sich die Formschlusselemente 14 in der Lösestellung nicht mehr im Eingriff mit den Vertiefungen 10f. Das Sicherungselement 5 kann sich somit mit dem Kupplungselement 5 gegenüber dem Spindelkörper 2 verdrehen. Alternativ kann zwischen Haltemagnet 2g und Sicherungselement 5 ein Luftspalt verbleiben, um den Reibungswiderstand des Sicherungselementes 5 bei einem Spannvorgang zu verringern.

Wie in Fig. 16 gezeigt, sind Formschlusselemente 14 des Sicherungselementes 5 ähnlich einer Innenverzahnung ausgestaltet. Die Formschlusselemente 14 bilden sich in Längsrichtung L erstreckende Fortsätze, die in Vertiefungen 10f des Formschlusselementes 10 eingreifen. Über den Umfang des Formschlusselementes 10 ist eine Vielzahl von Vertiefungen 10f angeordnet. Die Vertiefungen 10f bilden mit den zwischen den Vertiefungen 10f verbleibenden Erhöhungen des Formschlusselementes 10 einen Zahnkranz. Aufgrund der Vielzahl der Vertiefungen 10f über dem Umfang des Formschlusselementes 10 kann das Sicherungselement 5 in einer Vielzahl von Winkelstellungen auf das Formschlusselement 10 aufgesetzt werden.

Das Sicherungselement 5 ist mit einer Durchgangsöffnung 5a versehen, die zur Aufnahme des Gewindebolzens 4a dient und wie der Gewindebolzen 4a oder das Kupplungsgewinde 4b mit einem Formschlussorgan 5f versehen ist. Die parallel zueinander orientierten Formschlussorgane 4c des Kupplungsgewindes 4b und 5f der Öffnung 4a bilden eine drehstarre, verschiebliche Führung des Kupplungselementes 5 auf den Gewindebolzen 4a. Somit dreht sich das in der Lösestellung durch den Haltemagneten 2g gehaltene Sicherungselement 5 mit dem Gewindebolzen 4a mit.

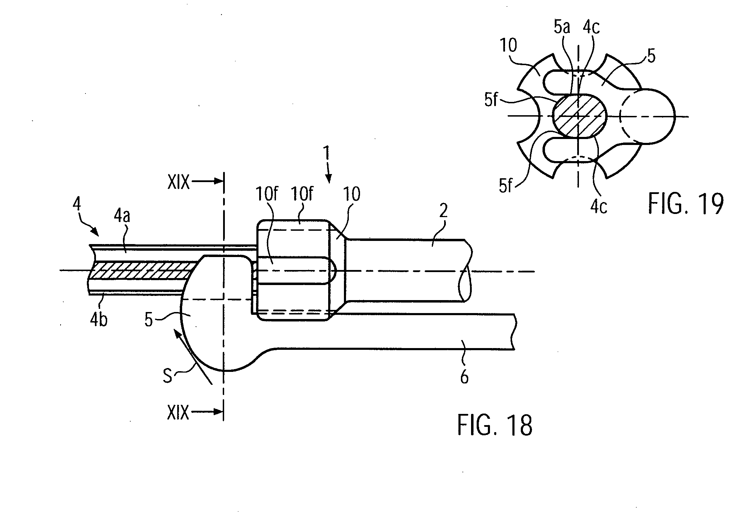

Fig. 18 und Fig. 19 zeigen ein siebtes Ausführungsbeispiel einer erfindungsgemäßen Spannvorrichtung. Für Elemente, die in Funktion und Aufbau den Elementen der vorhergehenden Ausführungsbeispiele entsprechen, werden dieselben Bezugszeichen verwendet.

Bei dem Ausführungsbeispiel der Fig. 18 und 19 formt der Betätigungshebel 6 das Sicherungselement 5. Der Betätigungshebel 6 ist über eine (hier nicht gezeigte) gelenkige Lagerung mit dem Spindelkörper 2 verbunden. Indem der Betätigungshebel 6 nach einer Drehung des Spindelkörpers 2 in Richtung des Kupplungselementes 4 umgeklappt wird, wird das Sicherungselement 5 in die Sicherungsstellung überführt. Das beispielhaft am Ende des Betätigungshebels 6 angeordnete Sicherungselement 5 weist dazu in einer Öffnung 5a sich einander gegenüberliegende Formschlussorgane 5f auf, die in der Sicherungsstellung auf sich einander gegenüberliegenden Formschlussorgane 4c des Gewindebolzens 4a aufliegen. Somit ist eine Drehung des Kupplungselementes 4 gegenüber dem Spindelkörper 2 über den Betätigungshebel 6 blockiert.

Um die Position des Betätigungshebels 6 in der Sicherungsstellung zu stabilisieren, kann das Formschlusselement 10 mit Vertiefungen 10f ausgestattet sein, deren Innenflächen an die Außenkonturen des Betätigungshebels 6 angepasst sind und somit seitliche Stützflächen für die Betätigungshebel 6 bieten.

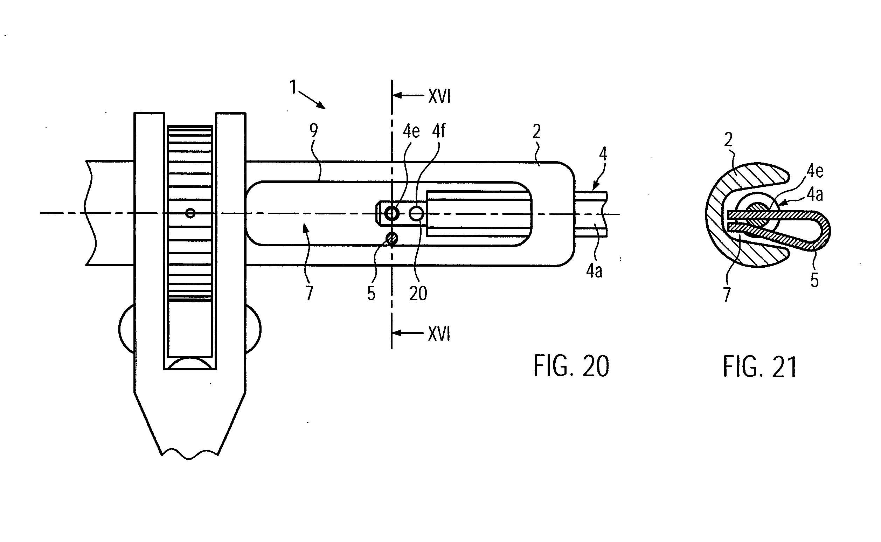

Fig. 20 und 21 zeigen ein achtes Ausführungsbeispiel einer erfindungsgemäßen Spannvorrichtung 1.

Das Sicherungselement 5 ist als Sicherungssplint ausgeführt. An einem in den Spindelkörper 2 hineinragenden Ende des Kupplungselementes 4 ist eine Durchgangsöffnung 4e angeordnet, die der Fortführung und formschlüssigen Aufnahme des Sicherungselementes 5 dient. Über die Wartungsöffnung 9 des Spindelkörpers 2 ist der Hohlraum 7, in dem das Ende des Kupplungselementes 4 aufgenommen ist, zugänglich. Soll nun das Kupplungselement in einer bestimmten Spannstellung gegenüber dem Spindelkörper 2 drehstarr blockiert werden, kann das Sicherungselement 5, wie in Fig. 21 gezeigt, in die Durchgangsöffnung 4e eingesteckt werden. Aufgrund seiner Länge, die deutlich größer als die Breite des Hohlraumes 7 ist, stößt das Sicherungselement 5 bei einer unbeabsichtigten Drehung des Kupplungselementes 4 gegenüber dem Spindelkörper 2 gegen die Innenwände des Hohlraumes 7.

Ferner kann die Spannvorrichtung eine Ausdrehsicherung aufweisen. Die Ausdrehsicherung kann von einem Federbolzen 20 gebildet sein, der in eine weitere Durchgangsöffnung 4f des Kupplungselementes 4 einsetzbar ist. Bei eingesetztem Federbolzen 20 kann das Kupplungselement 4 bis zu einer Position aus dem Spindelkörper 2 herausgedreht werden, bei der der Federbolzen 20 an die Innenwand des Hohlraums 7 stößt. Ein gänzliches Herausdrehen des Kupplungselementes 4 aus dem Spindelkörper 2 ist somit ausgeschlossen.

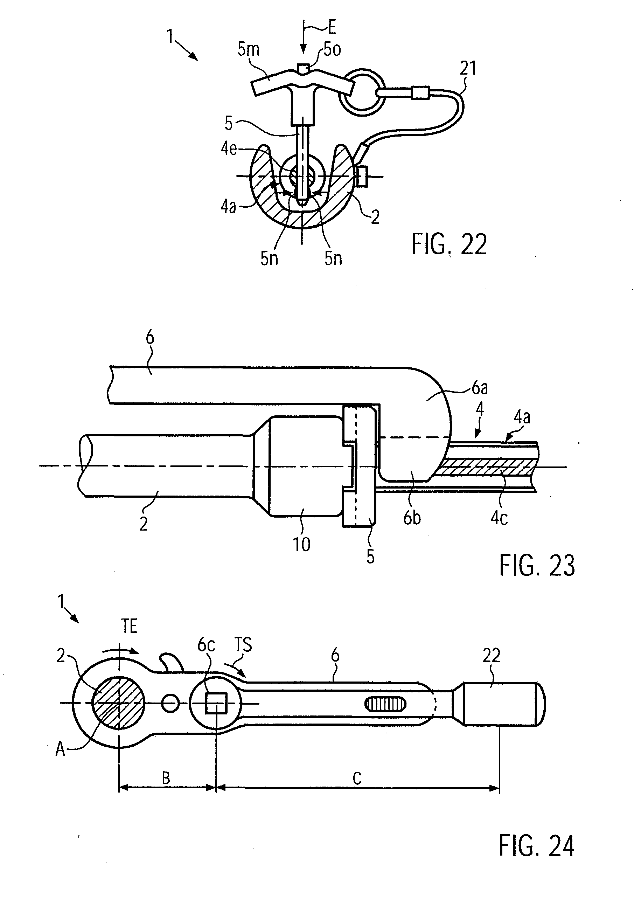

Fig. 22 zeigt ein neuntes Ausführungsbeispiel einer erfindungsgemäßen Spannvorrichtung, wobei für Elemente, die in Funktion und Aufbau den Elementen der Ausführungsbeispiele der Fig. 1 bis 21 entsprechen, dieselben Bezugszeichen verwendet werden.

Wie bei dem Ausführungsbeispiel der Fig. 20 und 21 ist das Sicherungselement 5 in den Gewindebolzen 4a einsteckbar ausgestaltet. Dabei ist das Sicherungselement 5 bolzenartig ausgestaltet und mit einem Griff 5m versehen. Der Griff 5m ist ergonomisch ausgestaltet und bietet Flächen zum Eindrücken oder Herausziehen des Sicherungselementes 5.

An seiner Unterseite ist das Sicherungselement 5 mit Riegelelementen 5n ausgestattet, die sich quer zu einer Einführrichtung E erstrecken und somit ein Herausziehen des Sicherungselementes 5 aus der Durchgangsöffnung 4e des Gewindebolzens 4a blockieren. Die Riegelelemente 5n können über ein Bedienorgan 5o entriegelbar ausgestaltet sein. Beispielsweise können die Riegelelemente 5n durch Drücken des Bedienorgans 5o in das Sicherungselement 5 hineingezogen werden, um eine Bewegung des Sicherungselementes 5 entgegen der Einführrichtung E freizugeben.

Das Sicherungselement 5 kann über eine Verliersicherung 21 mit der Spannvorrichtung 1 unverlierbar verbunden sein. Die Verlierversicherung 21 kann z. B. als Band ausgestaltet sein, das durch eine Öffnung des Sicherungselementes 5 hindurchgeführt und beispielsweise mit dem Spindelkörper 2 über eine Schraubenverbindung verbunden ist.

Fig. 23 ist ein zehntes Ausführungsbeispiel einer erfindungsgemäßen Spannvorrichtung. Der Betätigungshebel 6 ist wie bei dem Ausführungsbeispiel der Fig. 18 drehbar an dem Spindelkörper 2 befestigt. Nachdem das Sicherungselement 5 in einer Sicherungsstelle verschoben wurde, kann auch der Hebel in einer Sicherungsstellung überführt werden, indem er in Richtung des Kupplungselementes 4 umgeklappt wird.

Der Hebel 6 weist ein gabelförmiges Ende 6a auf, das in der Sicherungsstellung das Sicherungselement 5 hintergreift und somit eine Verschiebung des Sicherungselementes 5 in die Lösestellung verhindert. In der Sicherungsstellung des Betätigungselementes 6 sind zwei Gabelschenkel 6b des gabelförmigen Endes 6a auf gegenüberliegenden Seiten des Gewindebolzens 4a angeordnet. Zusätzlich zu der durch das Sicherungselement 5 realisierten Verdrehsicherung kann zusätzlich das gabelförmige Ende 6a des Betätigungshebels 6 eine Verdrehsicherung bilden, in dem nach innen weisende Flächen der gabelförmigen Enden 6b auf als Abflachungen ausgestalteten Formschlussorganen des Gewindebolzens 4a aufliegen.

Fig. 24 zeigt eine weitere mögliche Ausgestaltung des Betätigungshebels 6, welche die Einstellung einer bestimmten Spannung in der Spannvorrichtung ermöglicht. Hierzu weist bei der Betätigungshebel 6 eine Werkzeugschnittstelle 6c auf, die vorzugsweise als standardisierter Vierkant zur Aufnahme eines handelsüblichen Drehmomentschlüssels 22 ausgestaltet ist. Um den Drehmomentschlüssel 22 außerhalb des Spindelkörpers 2 mit dem Betätigungshebel 6 verbinden zu können, ist die Werkzeugschnittstelle 6c in einem Abstand B von dem Spindelkörper 2 beabstandet. Bei einem Abstand B der Werkzeugschnittstelle 6c von der Längsachse A der Gewindebolzen 4a und einer Hebellänge C des eingesetzten Drehmomentschlüssels 22 ist somit für ein Betätigungsmoment TE ein Drehmoment TS = TE x C : B + C über den Drehmomentschlüssel 22 aufzubringen.

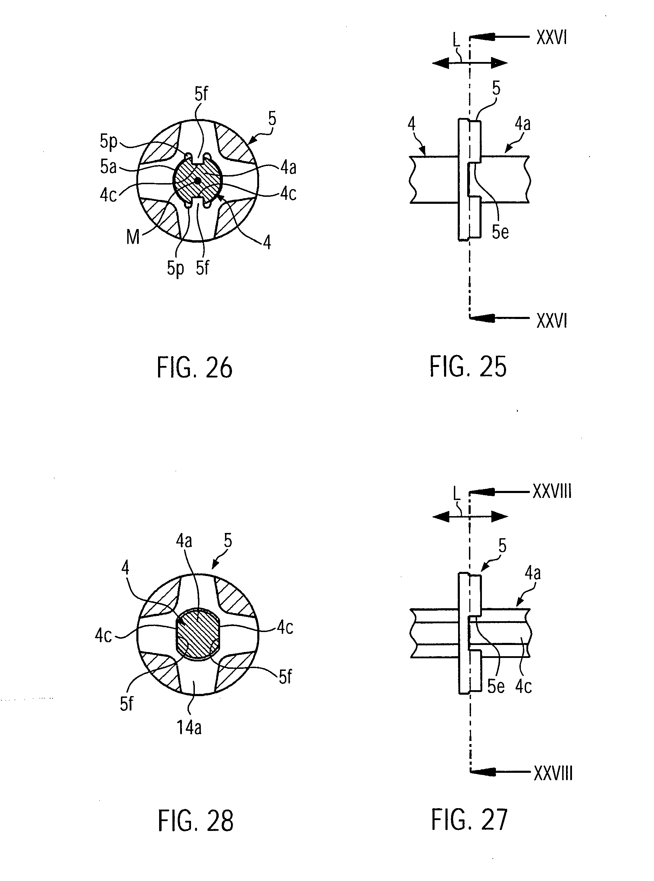

Figuren 25 und 26 zeigen ein elftes Ausführungsbeispiel mit einem verschieblich und drehstarr auf dem Kupplungselement 4 geführten Sicherungselement 5. Für Elemente, die in Funktion und Aufbau den Elementen der vorhergehenden Ausführungsbeispiele entsprechen werden dieselben Bezugszeichen verwendet. Der Kürze halber wird auf die Unterschiede zum Ausführungsbeispiel der Figuren 1 bis 10 eingegangen.

Die Formschlussorgane 5f des Kupplungselementes 5 sind als zungenartige Fortsätze geformt, die in komplementär ausgestaltete, in Längsrichtung L verlaufende und als Aussparungen geformte Formschlussorgane 4c des Kupplungselementes 4 eingreifen. Die Formschlussorgane 4c und 5f haben jeweils einen im Wesentlichen rechteckigen Querschnitt. Um die durch die Formschlussorgane 5f entstehende Kerbwirkung zu verringern, insbesondere an dem Übergang zwischen den kreisrunden Abschnitten der Öffnung 5a und dem zungen- oder laschenartigen Formschlussorgan 5f, sind beidseits der Formschlussorgane 5f Entlastungskerben 5b angeordnet, deren vergrößerter Radius auftretende Spannungsspitzen verringert.

Figuren 27 und 28 zeigen ein zwölftes Ausführungsbeispiel eines in Längsrichtung L verschieblich auf dem Kupplungselement 4 gelagerten Sicherungselementes 5.

Die Formschlussorgane 5f des Sicherungselementes 5 sind als Abflachungen ausgestaltet, die an ebenfalls als Abflachungen ausgestalteten Formschlussorganen 4c des Kupplungselementes 4 anliegen. Die als Abflachungen ausgestalteten Formschlussorgane 4c sind an sich gegenüberliegenden Seiten des Gewindebolzens 4a angeordnet, wobei sich die eben ausgestalteten Abflachungen parallel zueinander erstrecken. Das Querschnittsprofil des Gewindebolzens 4a ist somit insgesamt um seinen Mittelpunkt M punktsymmetrisch ausgestaltet.

## Patentansprüche

1. Spannvorrichtung (1) für Ketten, mit einem Spindelkörper (2), der mit wenigstens einem Spindelgewinde (11) versehen ist, mit wenigstens zwei Kupplungselementen (3, 4), wobei wenigstens ein Kupplungselement (3, 4) ein mit dem Spindelgewinde (11) verschraubtes Kupplungsgewinde (3b, 4b) aufweist, und mit einem Sicherungselement (5), das von einer Lösestellung, in der das Kupplungsgewinde (3b, 4b) gegenüber dem Spindelgewinde (11) drehbar ist, in eine Sicherungsstellung, in der eine Drehung des Kupplungsgewindes (3b, 4b) gegenüber dem Spindelkörper (11) formschlüssig blockiert ist, überführbar ausgestaltet ist, wobei das Sicherungselement (5) in der Sicherungsstellung zwischen dem wenigstens einen mit einem Kupplungsgewinde (3b, 4b) versehenen Kupplungselement (3, 4) und dem Spindelkörper (2) eine formschlüssige Starrkörperkupplung herstellt, **dadurch gekennzeichnet, dass** das Sicherungselement (5) in der Lösestellung drehstarr und in eine Längsrichtung (L) verschieblich auf dem Kupplungselement (3, 4) angeordnet ist.

2. Spannvorrichtung (1) nach Anspruch 1, **dadurch gekennzeichnet, dass** das Sicherungselement (5) an der Spannvorrichtung (1) zwischen der Sicherungsstellung und der Lösestellung beweglich geführt ist.

3. Spannvorrichtung (1) nach Anspruch 1 oder 2, **dadurch gekennzeichnet, dass** das Sicherungselement (5) wenigstens in der Sicherungsstellung drehstarr mit dem Kupplungselement (3, 4) verbunden ist.

4. Spannvorrichtung (1) nach einem der Ansprüche 1 bis 3, **dadurch gekennzeichnet, dass** das Kupplungsgewinde (4b) und das Sicherungselement (5) sich in Längsrichtung (L) erstreckende, nicht kreissymmetrische und komplementär ausgebildete Halteprofile (P1, P2) aufweisen.

5. Spannvorrichtung (1) nach Anspruch 4, **dadurch gekennzeichnet, dass** das Halteprofil (P1) des Kupplungsgewindes (4b) von einem Gewindebolzen (4a) und das Halteprofil (P2) des Sicherungselementes (5) von einer den Gewindebolzen aufnehmenden Öffnung (5a) gebildet ist.

6. Spannvorrichtung (1) nach einem der Ansprüche 1 bis 5, **dadurch gekennzeichnet, dass** das Sicherungselement (5) und der Spindelkörper (2) jeweils wenigstens eine Eingriffsfläche (5e, 10c) aufweisen, wobei die Eingriffsflächen (5e, 10c) parallel zueinander und gegenüber der Längsrichtung (L) geneigt verlaufen und in der Sicherungsstellung aufeinander liegen.

7. Spannvorrichtung (1) nach einem der Ansprüche 1 bis 6, **dadurch gekennzeichnet, dass** das Sicherungselement (5) wenigstens ein Formschlusselement (14) aufweist, das sich in der Sicherungsstellung formschlüssig mit einem komplementär ausgestalteten Formschlusselement (10) des Spindelkörpers (2) im Eingriff befindet.

8. Spannvorrichtung (1) nach einem der Ansprüche 1 bis 7, **dadurch gekennzeichnet, dass** das Sicherungselement (5) und/oder der Spindelkörper (2) wenigstens einen Haltemagneten (5d) aufweist, der in der Sicherungsstellung das Sicherungselement (5) und den Spindelkörper (2) durch eine magnetische Haltekraft verbindet.

9. Spannvorrichtung (1) nach einem der Ansprüche 1 bis 8, **dadurch gekennzeichnet, dass** das Sicherungselement (5) und der Spindelkörper (2) in der Sicherungsstellung wenigstens eine gemeinsame Durchgangsöffnung (13) bilden.

10. Spannvorrichtung (1) nach einem der Ansprüche 1 bis 9, **dadurch gekennzeichnet, dass** die Spannvorrichtung (1) zwei zueinander gegenläufige Spindelgewinde (11) umfasst, wobei beide Kupplungselemente (3, 4) ein Kupplungsgewinde (3b, 4b) aufweisen, das mit jeweils einem Spindelgewinde (1.1) verschraubt ist.

11. Spannvorrichtung (1) nach einem der Ansprüche 1 bis 10, **dadurch gekennzeichnet, dass** wenigstens ein Kupplungselement (3, 4) einen Gewindebolzen (3a, 4a) aufweist, der das Kupplungsgewinde (3b, 4b) umfasst, und dass der Spindelkörper (2) wenigstens einen Hohlraum (7) zur Aufnahme des Gewindebolzens (3a, 4a) aufweist, der mit einer Wartungsöffnung (9) versehen ist.

12. Spannvorrichtung (1) nach Anspruch 11, **dadurch gekennzeichnet, dass** der Spindelkörper (2) im Bereich des Hohlraums (7) einen sich quer zur Längsrichtung (L) öffnenden, U-förmigen Querschnitt (2c) aufweist.

13. Spannvorrichtung (1) nach Anspruch 11 oder 12, **dadurch gekennzeichnet, dass** der Hohlraum (7) und/oder die Wartungsöffnung (9) gegossen und/oder in den Spindelkörper (2) eingeschmiedet sind.

14. Spannvorrichtung (1) nach einem der Ansprüche 1 bis 13, **dadurch gekennzeichnet, dass** der Spindelkörper (2) einen Betätigungsabschnitt (8) aufweist und sich wenigstens abschnittsweise symmetrisch von beiden Seiten des Betätigungsabschnittes (8) weg erstreckt.

15. Spannvorrichtung (1) nach einem der Ansprüche 1 bis 14, **dadurch gekennzeichnet, dass** die Spannvorrichtung (1) mit einem Betätigungshebel (6) versehen ist, der an dem Spindelkörper (2) von einer Betätigungsstellung in eine Sicherungsstellung drehbar gelagert ist, wobei das Sicherungselement (5, 5') an dem Betätigungshebel (6) angeordnet ist und in der Sicherungsstellung formschlüssig in ein benachbart angeordnetes Kupplungselementes (4) eingreift.

16. Spannvorrichtung (1) nach einem der Ansprüche 1 bis 15, **dadurch gekennzeichnet, dass** die Spannvorrichtung (1) mit einem Betätigungshebel (6) versehen ist, der eine Werkzeugschnittstelle (6c) aufweist, durch die ein Betätigungsmoment (TE) auf den Betätigungshebel (6) ausübbar ist.

## Claims

1. Tensioning device (1) for chains with a spindle body (2) which is provided with at least one spindle thread (11), with at least two coupling elements (3, 4), wherein at least one coupling element (3, 4) comprises a coupling thread (3b, 4b) screwed to the spindle thread (11), and with a securing element (5) which can be transferred from a release position, in which the coupling thread (3b, 4b) can be rotated with respect to the spindle thread (11), to a securing position, in which a rotation of the coupling thread (3b, 4b) with respect to the spindle body (2) is blocked in a form-fitting manner, wherein the securing element (5) creates a positive rigid body coupling between the at least one coupling element (3, 4) provided with a coupling thread (3b, 4b) and the spindle body (2) in the securing position, **characterized in that** the securing element (5) is, in the release position, arranged on the coupling element (3, 4) such that it is torsionally rigid and movable in a longitudinal direction (L).

2. Tensioning device (1) according to claim 1, **characterized in that** the securing element (5) is movably guided at the tensioning device (1) between the securing position and the release position.

3. Tensioning device (1) according to claim 1 or 2, **characterized in that** the securing element (5) is connected to the coupling element (3, 4) in a torsionally rigid manner at least in the securing position.

4. Tensioning device (1) according to one of claims 1 to 3, **characterized in that** the coupling thread (4b) and the securing element (5) comprise retaining profiles (P1, P2) which extend in the longitudinal direction (L), are not circularly symmetric and are embodied to be complementary.

5. Tensioning device (1) according to claim 4, **characterized in that** the retaining profile (P1) of the coupling thread (4b) is formed by a threaded bolt (4a), and the retaining profile (P2) of the securing element (5) is formed by an opening (5a) receiving the threaded bolt.

6. Tensioning device (1) according to one of claims 1 to 5, **characterized in that** the securing element (5) and the spindle body (2) each comprise at least one engagement face (5e, 10c), where the engagement faces (5e, 10c) extend parallel to each other and inclined with respect to the longitudinal direction (L) and rest one upon the other in the securing position.

7. Tensioning device (1) according to one of claims 1 to 6, **characterized in that** the securing element (5) comprises at least one positive locking element (14) which, in the securing position, is positively engaged with a complementarily embodied positive locking element (10) of the spindle body (2).

8. Tensioning device (1) according to one of claims 1 to 7, **characterized in that** the securing element (5) and/or the spindle body (2) comprise at least one retaining magnet (5d) which connects the securing element (5) and the spindle body (2) by a magnetic holding force in the securing position.

9. Tensioning device (1) according to one of claims 1 to 8, **characterized in that** the securing element (5) and the spindle body (2) form at least one common through opening (13) in the securing position.

10. Tensioning device (1) according to one of claims 1 to 9, **characterized in that** the tensioning device (1) comprises two spindle threads (11) running in opposite directions, wherein both coupling elements (3, 4) comprise a coupling thread (3b, 4b) which is screwed to one spindle thread (11) each.

11. Tensioning device (1) according to one of claims 1 to 10, **characterized in that** at least one coupling element (3, 4) comprises a threaded bolt (3a, 4a) which comprises the coupling thread (3b, 4b), and that the spindle body (2) comprises at least one hollow space (7) for receiving the threaded bolt (3a, 4a) which is provided with a service opening (9).

12. Tensioning device (1) according to claim 11, **characterized in that** the spindle body (2) exhibits, in the region of the hollow space (7), a U-shaped cross-section (2c) opening transverse to the longitudinal direction (L).

13. Tensioning device (1) according to claim 11 or 12, **characterized in that** the hollow space (7) and/or the service opening (9) are cast, and/or forged into the spindle body (2).

14. Tensioning device (1) according to one of claims 1 to 13, **characterized in that** the spindle body (2) comprises an actuation section (8) and at least in sections extends symmetrically away from both sides of the actuation section (8).

15. Tensioning device (1) according to one of claims 1 to 14, **characterized in that** the tensioning device (1) is provided with an operating lever (6) which is mounted at the spindle body (2) to be rotatable from an operating position to a securing position, wherein the securing element (5, 5') is arranged at the operating lever (6) and positively engages in an adjacently arranged coupling element (4) in the securing position.

16. Tensioning device (1) according to one of claims 1 to 15, **characterized in that** the tensioning device (1) is provided with an operating lever (6) which comprises a tool interface (6c) by which an actuation moment (TE) can be exerted on the operating lever (6).

## Revendications

1. Dispositif tendeur (1) pour chaines, comprenant un corps de broche (2), qui est doté d'au moins un filetage de broche (11), comprenant au moins deux éléments d'accouplement (3, 4), au moins un élément d'accouplement (3, 4) présentant un filetage d'accouplement (3b, 4b) vissé sur le filetage de broche (11), et comprenant un élément d'arrêt de sécurisation (5), qui est conçu de manière à pouvoir être transféré d'une position de déblocage dans laquelle le filetage d'accouplement (3b, 4b) peut tourner par rapport au filetage de broche (11), à une position de sécurisation dans laquelle une rotation du filetage d'accouplement (3b, 4b) est bloquée par complémentarité de formes par rapport au corps de broche (11), l'élément de sécurisation (5) établissant, dans la position de sécurisation, un accouplement à corps rigides par complémentarité de formes, entre ledit au moins un élément d'accouplement (3, 4) doté d'un filetage d'accouplement (3b, 4b) et le corps de broche (2), **caractérisé en ce que** dans la position de déblocage, l'élément de sécurisation (5) est agencé de manière fixe en rotation et de manière à pouvoir coulisser dans une direction longitudinale (L) sur l'élément d'accouplement (3, 4).

2. Dispositif tendeur (1) selon la revendication 1, **caractérisé en ce que** l'élément de sécurisation (5) est guidé de manière mobile sur le dispositif tendeur (1), entre la position de sécurisation et la position de déblocage.

3. Dispositif tendeur (1) selon la revendication 1 ou la revendication 2, **caractérisé en ce que** l'élément de sécurisation (5) est relié de manière fixe en rotation à l'élément d'accouplement (3, 4), au moins dans la position de sécurisation.

4. Dispositif tendeur (1) selon l'une des revendications 1 à 3, **caractérisé en ce que** le filetage d'accouplement (4b) et l'élément de sécurisation (5) présentent des profils de retenue (P1, P2) sans symétrie circulaire et d'une configuration complémentaire, et s'étendant dans la direction longitudinale (L).

5. Dispositif tendeur (1) selon la revendication 4, **caractérisé en ce que** le profil de retenue (P1) du filetage d'accouplement (4b) est formé par une tige filetée (4a), et le profil de retenue (P2) de l'élément de sécurisation (5) par une ouverture (5a) accueillant la tige filetée.

6. Dispositif tendeur (1) selon l'une des revendications 1 à 5, **caractérisé en ce que** l'élément de sécurisation (5) et le corps de broche (2) présentent chacun au moins une surface d'engrènement (5e, 10c), les surfaces d'engrènement (5e, 10c) s'étendant parallèlement les unes aux autres et de manière inclinée par rapport à la direction longitudinale (L), et étant mutuellement en appui dans la position de sécurisation.

7. Dispositif tendeur (1) selon l'une des revendications 1 à 6, **caractérisé en ce que** l'élément de sécurisation (5) comporte au moins un élément de liaison par complémentarité de formes (14), qui, dans la position de sécurisation, se trouve en prise par complémentarité de formes avec un élément de liaison par complémentarité de formes (10) de configuration complémentaire du corps de broche (2).

8. Dispositif tendeur (1) selon l'une des revendications 1 à 7, **caractérisé en ce que** l'élément de sécurisation (5) et/ou le corps de broche (2) présentent au moins un aimant de maintien (5d), qui, dans la position de sécurisation, relie l'élément de sécurisation (5) et le corps de broche (2) par une force de maintien magnétique.

9. Dispositif tendeur (1) selon l'une des revendications 1 à 8, **caractérisé en ce que** l'élément de sécurisation (5) et le corps de broche (2) forment, dans la position de sécurisation, au moins une ouverture de passage commune (13).

10. Dispositif tendeur (1) selon l'une des revendications 1 à 9, **caractérisé en ce que** le dispositif tendeur (1) comprend deux filetages de broche (11) de sens opposé, les deux éléments d'accouplement (3, 4) présentant un filetage d'accouplement (3b, 4b), qui est respectivement en prise vissée avec un filetage de broche (11) associé.

11. Dispositif tendeur (1) selon l'une des revendications 1 à 10, **caractérisé en ce qu'**au moins un élément d'accouplement (3, 4) présente une tige filetée (3a, 4a), qui comprend le filetage d'accouplement (3b, 4b), et **en ce que** le corps de broche (2) présente au moins une cavité (7), qui est destinée à accueillir la tige filetée (3a, 4a) et est munie d'une ouverture d'entretien (9).

12. Dispositif tendeur (1) selon la revendication 11, **caractérisé en ce que** le corps de broche (2) présente, dans la zone de la cavité (7), une section transversale (2c) en forme de U s'ouvrant transversalement à la direction longitudinale (L).

13. Dispositif tendeur (1) selon la revendication 11 ou la revendication 12, **caractérisé en ce que** la cavité (7) et/ou l'ouverture d'entretien (9) sont obtenues par moulage et/ou forgeage du corps de broche (2).

14. Dispositif tendeur (1) selon l'une des revendications 1 à 13, **caractérisé en ce que** le corps de broche (2) présente un tronçon d'actionnement (8) et s'étend symétriquement, au moins par secteurs, de part et d'autre du tronçon d'actionnement (8) en s'éloignant de celui-ci.

15. Dispositif tendeur (1) selon l'une des revendications 1 à 14, **caractérisé en ce que** le dispositif tendeur (1) est muni d'un levier d'actionnement (6), qui est monté sur le corps de broche (2) de manière à pouvoir tourner entre une position d'actionnement et une position de sécurisation, l'élément de sécurisation (5, 5') étant agencé sur le levier d'actionnement (6), et venant, dans la position de sécurisation, engrener par complémentarité de formes dans un élément d'accouplement (4) agencé au voisinage.

16. Dispositif tendeur (1) selon l'une des revendications 1 à 15, **caractérisé en ce que** le dispositif tendeur (1) est muni d'un levier d'actionnement (6), qui présente une interface d'outil (6c) par l'intermédiaire de laquelle il est possible d'exercer un couple d'actionnement (TE) sur le levier d'actionnement (6).
